(19) Europäisches Patentamt / European Patent Office / Office européen des brevets

(11) **EP 4 447 524 A1**

(12) **EUROPEAN PATENT APPLICATION**
published in accordance with Art. 153(4) EPC

(43) Date of publication:
**16.10.2024 Bulletin 2024/42**

(21) Application number: **22914950.5**

(22) Date of filing: **28.12.2022**

(51) International Patent Classification (IPC):
**H04W 24/02** (2009.01)

(52) Cooperative Patent Classification (CPC):
**H04W 24/02**

(86) International application number:
**PCT/CN2022/142946**

(87) International publication number:
**WO 2023/125699 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.12.2021 CN 202111663303**

(71) Applicant: **Huawei Technologies Co., Ltd.**
**Shenzhen, Guangdong 518129 (CN)**

(72) Inventors:
• **HANG, Haicun**
  **Shenzhen, Guangdong 518129 (CN)**
• **ZHANG, Wenkai**
  **Shenzhen, Guangdong 518129 (CN)**
• **CHEN, Jiaxuan**
  **Shenzhen, Guangdong 518129 (CN)**
• **LIANG, Jing**
  **Shenzhen, Guangdong 518129 (CN)**
• **WU, Yiqun**
  **Shenzhen, Guangdong 518129 (CN)**
• **CHEN, Zhitang**
  **Shenzhen, Guangdong 518129 (CN)**
• **JIN, Huangping**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **COMMUNICATION METHOD AND APPARATUS**

(57) This disclosure relates to a communication method and apparatus. A terminal device obtains M pieces of first downlink channel sub-data, where each piece of first downlink channel sub-data corresponds to one data space in M data spaces. For an $i^{th}$ piece of first downlink channel sub-data in the M pieces of first downlink channel sub-data, the terminal device determines, based on a first dictionary corresponding to an $i^{th}$ data space, first information corresponding to the $i^{th}$ piece of first downlink channel sub-data, where M pieces of first information are determined in total. The terminal device sends first indication information, to indicate the M pieces of first information. Different data spaces can represent different channel environment information. The terminal device feeds back first information corresponding to different data spaces, so that an access network device can determine a correspondence between first information and environment information. In this case, the first information fed back by the terminal device can reflect an actual communication environment, and accuracy of the first information fed back by the terminal device is improved.

FIG. 5

**Description**

**CROSS-REFERENCE TO RELATED APPLICATIONS**

This application claims priority to Chinese Patent Application No. 202111663303.8, filed with the China National Intellectual Property Administration on December 31, 2021 and entitled "COMMUNICATION METHOD AND APPARATUS", which is incorporated herein by reference in its entirety.

**TECHNICAL FIELD**

This disclosure relates to the field of communication technologies, and in particular, to a communication method and apparatus.

**BACKGROUND**

A 5th generation (the 5th generation, 5G) mobile communication system has higher requirements on a system capacity, spectral efficiency, and the like. In the 5G communication system, application of a massive multiple-input multiple-output (massive multiple-input multiple-output, massive-MIMO) technology plays a critical role in improving the spectral efficiency of the system. A base station can simultaneously provide high-quality services for more user equipments (user equipments, UEs) by using the massive-MIMO technology. A key step is that the base station precodes downlink data of a plurality of UEs. Through precoding, spatial multiplexing (spatial multiplexing) can be implemented, interference between the UEs is reduced, and a signal to interference plus noise ratio (signal to interference plus noise ratio, SINR) at a receiver is increased, improving a system throughput. To more accurately precode the downlink data of the UE, the base station may obtain channel state information (channel state information, CSI) of a downlink channel, reconstruct the downlink channel based on the CSI, and determine a precoding matrix by using the reconstructed downlink channel, to perform precoding. Therefore, how to make the CSI fed back by the UE more accurate is a technical problem worth studying.

**SUMMARY**

This disclosure provides a communication method and apparatus, to improve accuracy of CSI fed back by UE.
According to a first aspect, a first communication method is provided. The method may be performed on a terminal device side. The method may be performed by using software, hardware, or a combination of software and hardware. For example, the method is performed by a terminal device, a circuit system, or a large device including a terminal device. The circuit system can implement a function of the terminal device. The method includes: obtaining M pieces of first downlink channel sub-data, where each piece of first downlink channel sub-data corresponds to one data space in M data spaces, and M is an integer greater than 1; for an $i^{th}$ piece of first downlink channel sub-data in the M pieces of first downlink channel sub-data, determining, based on a first dictionary corresponding to an $i^{th}$ data space in the M data spaces, first information corresponding to the $i^{th}$ piece of first downlink channel sub-data, where M pieces of first information are determined in total, i is an integer from 1 to M, the $i^{th}$ piece of first downlink channel sub-data corresponds to the $i^{th}$ data space, the first dictionary includes a plurality of elements, the first information corresponding to the $i^{th}$ piece of first downlink channel sub-data corresponds to P elements in the plurality of elements, and P is a positive integer; and sending first indication information, where the first indication information indicates the M pieces of first information.
In this disclosure, each of the M pieces of first downlink channel sub-data obtained by the terminal device may correspond to one data space in the M data spaces, and first information corresponding to all pieces of first downlink channel sub-data may be determined based on dictionaries corresponding to different data spaces. Different data spaces can represent different location information, that is, different data spaces can represent different channel environment information. The terminal device feeds back first information corresponding to different data spaces, so that an access network device can determine a correspondence between first information and environment information. In this case, the first information fed back by the terminal device can reflect an actual communication environment, and accuracy of the first information fed back by the terminal device is improved. The access network device can reconstruct an accurate downlink channel based on the first information fed back by the terminal device.
In an optional implementation, the first indication information indicates identifiers of the M pieces of first information, and sending the first information includes: sending the identifiers of the M pieces of first information in a first order, where the first order is an arrangement order of the M data spaces. The first order specifies that the terminal device first sends an identifier of first information corresponding to a specific data space, and then sends an identifier of first information corresponding to a specific data space. For the terminal device and the access network device, the first order is known. Therefore, after receiving the identifiers of the M pieces of first information, the access network device can further determine a correspondence between a data space and an identifier of first information, to avoid a correspondence error.

In an optional implementation, the first order is a predefined order; second indication information is received, and the second indication information indicates the first order; or the first order is determined, third indication information is sent, and the third indication information indicates the first order. For example, the first order is an order predefined in a protocol, and the terminal device and the access network device can determine the first order according to the protocol. Alternatively, the first order may be preconfigured in the terminal device and the access network device. Alternatively, the first order may be determined by the access network device. After determining the first order, the access network device may send the second indication information to the terminal device, so that the terminal device can determine the first order based on the second indication information. Alternatively, the first order may be determined by the terminal device. After determining the first order, the terminal device may send the third indication information to the access network device, so that the access network device can determine the first order based on the third indication information. It can be learned that a manner of determining the first order is flexible.

In an optional implementation, the M pieces of first downlink channel sub-data are obtained based on first downlink channel data, where the first downlink channel data is a preprocessing result; the first downlink channel data includes F consecutive columns of data in a preprocessing result; or the first downlink channel data is compressed information obtained by compressing a preprocessing result, where the preprocessing result is obtained by preprocessing second downlink channel data. The preprocessing result of the second downlink channel data may be directly used as the first downlink channel data, and there is no need to perform excessive processing on the preprocessing result. This is simple. Alternatively, it is considered that in a frequency domain direction (delay domain), energy is generally mainly concentrated around delay=0, and energy in another area may be basically ignored. Therefore, the terminal device may select F consecutive columns on two sides of the delay=0 as the first downlink channel data, and a coefficient of a remaining part may be 0 by default. In this case, complexity of processing the first downlink channel data can be reduced. Alternatively, the preprocessing result may be compressed to obtain the first downlink channel data, so that complexity of processing the first downlink channel data can be reduced. A process of preprocessing a piece of downlink channel data includes, for example, performing spatial-frequency joint projection on the downlink channel data.

In an optional implementation, a division manner of the M data spaces is predefined; fourth indication information is received, and the fourth indication information indicates a division manner of the M data spaces; or a division manner of the M data spaces is determined, fifth indication information is sent, and the fifth indication information indicates the division manner of the M data spaces. For example, if the division manner of the M data spaces is predefined in the protocol, both the terminal device and the access network device may determine the division manner of the M data spaces according to the protocol. Alternatively, the division manner of the M data spaces is determined by the access network device. The access network device may send the fourth indication information to the terminal device, so that the terminal device can determine the division manner of the M data spaces based on the fourth indication information. Alternatively, the division manner of the M data spaces may be determined by the UE. The UE may send the fifth indication information to the access network device, so that the access network device may determine the division manner of the M data spaces based on the fifth indication information. It can be learned that a manner of dividing the data space is flexible.

According to a second aspect, a second communication method is provided. The method may be performed on an access network device side. The method may be performed by using software, hardware, or a combination of software and hardware. For example, the method is performed by an access network device, a large device including an access network device, or a circuit system. The circuit system can implement a function of the access network device. Alternatively, the method is performed by the access network device or a network element of the access network device with assistance of an AI module independent of the access network device. This is not limited. For example, the access network device is an access network device, for example, a base station. The method includes: receiving first indication information, where the first indication information indicates M pieces of first information, and M is an integer greater than 1; for an $i^{th}$ piece of first information in the M pieces of first information, reconstructing an $i^{th}$ piece of second downlink channel sub-data based on a first dictionary corresponding to an $i^{th}$ data space in M data spaces, where M pieces of second downlink channel sub-data are obtained in total, the $i^{th}$ piece of first information corresponds to the $i^{th}$ data space, i is an integer from 1 to M, the first dictionary includes a plurality of elements, and the first information corresponding to the $i^{th}$ piece of second downlink channel sub-data corresponds to P elements in the plurality of elements; and reconstructing downlink channel information based on the M pieces of second downlink channel sub-data.

In an optional implementation, the receiving first indication information includes: receiving identifiers of the M pieces of first information in a first order, where the first order is an arrangement order of the M data spaces.

In an optional implementation, the first order is a predefined order; second indication information is sent, and the second indication information indicates the first order; or third indication information is received, and the third indication information indicates the first order.

In an optional implementation, the M data spaces correspond to M dictionaries, and each data space corresponds to one dictionary; the M data spaces all correspond to a same dictionary; or a quantity of dictionaries corresponding to the M data spaces is greater than 1 and less than M. In other words, the data space one-to-one corresponds to the dictionary, so that accuracy of first information determined based on the dictionary can be improved; all the data spaces may uniformly correspond to one dictionary, and samples used for training to obtain the dictionary may be more abundant, so that content included in the dictionary is more detailed; or a quantity of dictionaries corresponding to the data space may be less than a quantity of data spaces, for example, one dictionary may correspond to a plurality of data spaces, so that complexity can be reduced to some extent.

In an optional implementation, the reconstructing downlink channel information based on the M pieces of second downlink channel sub-data includes: obtaining compressed information based on the M pieces of second downlink channel sub-data; and obtaining the downlink channel information based on the compressed information.

In an optional implementation, a division manner of the M data spaces is predefined; fourth indication information is sent, and the fourth indication information indicates a division manner of the M data spaces; or fifth indication information is received, and the fifth indication information indicates a division manner of the M data spaces.

For technical effects brought by the second aspect or various optional implementations of the second aspect, refer to descriptions of the technical effect of the first aspect or the corresponding implementations.

According to a third aspect, a communication apparatus is provided. The communication apparatus may implement the method according to the first aspect. The communication apparatus has a function of the terminal device. In an optional implementation, the apparatus may include a one-to-one corresponding module for performing the method/operation/step/action described in the first aspect. The module may be a hardware circuit, or may be software, or may be implemented by a hardware circuit in combination with software. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

The processing unit is configured to obtain M pieces of first downlink channel sub-data, where each piece of first downlink channel sub-data corresponds to one data space in M data spaces, and M is an integer greater than 1. For an $i^{th}$ piece of first downlink channel sub-data in the M pieces of first downlink channel sub-data, the processing unit is further configured to determine, based on a first dictionary corresponding to an $i^{th}$ data space in the M data spaces, first information corresponding to the $i^{th}$ piece of first downlink channel sub-data, where M pieces of first information are determined in total, i is an integer from 1 to M, the $i^{th}$ piece of first downlink channel sub-data corresponds to the $i^{th}$ data space, the first dictionary includes a plurality of elements, the first information corresponding to the $i^{th}$ piece of first downlink channel sub-data corresponds to P elements in the plurality of elements, and P is a positive integer. The transceiver unit is configured to send first indication information, where the first indication information indicates the M pieces of first information.

For another example, the communication apparatus includes a processor, coupled to a memory, and configured to execute instructions in the memory, to implement the method according to the first aspect. Optionally, the communication apparatus further includes another component, for example, an antenna, an input/output module, and an interface. These components may be hardware, software, or a combination of software and hardware.

According to a fourth aspect, a communication apparatus is provided. The communication apparatus may implement the method according to the second aspect. The communication apparatus has a function of the access network device. The access network device is, for example, a base station, or a baseband apparatus in a base station. In an optional implementation, the apparatus may include a one-to-one corresponding module for performing the method/operation/step/action described in the second aspect. The module may be a hardware circuit, or may be software, or may be implemented by a hardware circuit in combination with software. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the related descriptions in the third aspect.

The transceiver unit is configured to receive first indication information, where the first indication information indicates M pieces of first information, and M is an integer greater than 1. For an $i^{th}$ piece of first information in the M pieces of first information, the processing unit is configured to reconstruct an $i^{th}$ piece of second downlink channel sub-data based on a first dictionary corresponding to an $i^{th}$ data space in M data spaces, where M pieces of second downlink channel sub-data are obtained in total, the $i^{th}$ piece of first information corresponds to the $i^{th}$ data space, i is an integer from 1 to M, the first dictionary includes a plurality of elements, and the first information corresponding to the $i^{th}$ piece of second downlink channel sub-data corresponds to P elements in the plurality of elements. The processing unit is further configured to reconstruct downlink channel information based on the M pieces of second downlink channel sub-data.

For another example, the communication apparatus includes a processor, coupled to a memory, and configured to execute instructions in the memory, to implement the method according to the second aspect. Optionally, the communication apparatus further includes another component, for example, an antenna, an input/output module, and an interface. These components may be hardware, software, or a combination of software and hardware.

According to a fifth aspect, a computer-readable storage medium is provided. The computer-readable storage medium is configured to store a computer program or instructions, and when the computer program or instructions is/are run, the methods/method according to the first aspect and/or the second aspect are/is implemented.

According to a sixth aspect, a computer program product including instructions is provided. When the computer program product runs on a computer, the methods/method according to the first aspect and/or the second aspect are/is implemented.

According to a seventh aspect, a chip system is provided. The chip system includes a processor, and may further include a memory, and the chip system is configured to implement the methods/method according to the first aspect and/or the second aspect. The chip system may include a chip, or may include a chip and another discrete component.

According to an eighth aspect, a communication system is provided, including the communication apparatus according to the third aspect and the communication apparatus according to the fourth aspect.

## BRIEF DESCRIPTION OF DRAWINGS

FIG. 1 is a diagram of a communication system;
FIG. 2 is a flowchart of a CSI feedback mechanism;
FIG. 3 is a diagram of an application scenario;
FIG. 4A to FIG. 4E are diagrams of several application frameworks of AI in a communication system;
FIG. 5 is a flowchart of a communication method;
FIG. 6 is a diagram of a dictionary;
FIG. 7 is a diagram of a communication method used when both UE and an access network device process compressed information;
FIG. 8 is a flowchart of another communication method;
FIG. 9A is a diagram of a network training phase and a network inference phase;
FIG. 9B to FIG. 9D are several diagrams of a network training phase;
FIG. 10 is a flowchart of still another communication method;
FIG. 11 is another diagram of a network training phase and a network inference phase; and
FIG. 12 is a block diagram of a communication apparatus.

## DESCRIPTION OF EMBODIMENTS

To make the objectives, technical solutions, and advantages of this disclosure clearer, the following further describes this disclosure in detail with reference to the accompanying drawings.

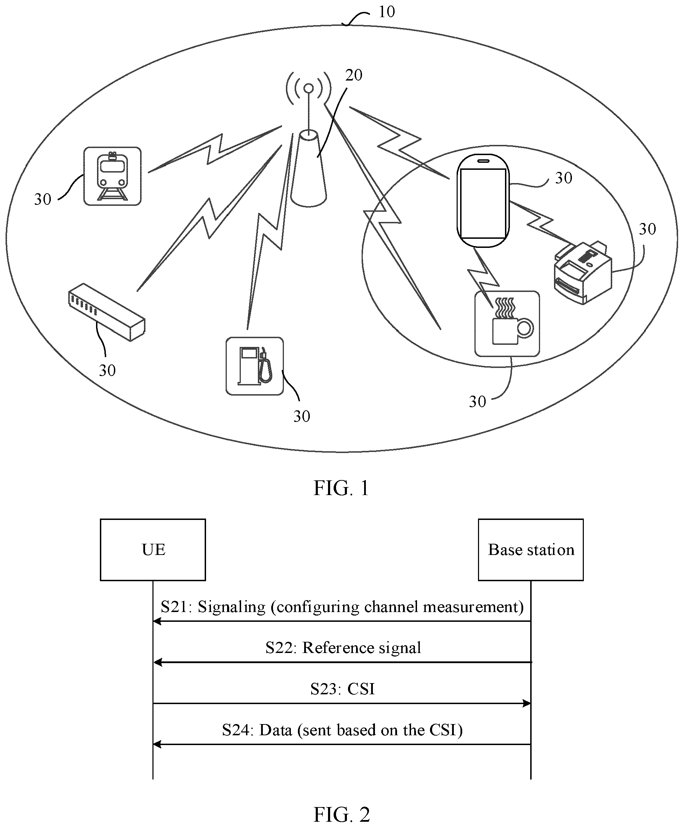

The technology provided in this disclosure may be applied to a communication system 10 shown in FIG. 1. The communication system 10 includes one or more communication apparatuses 30 (for example, a terminal device). The one or more communication apparatuses 30 are connected to one or more core network (core network, CN) devices via one or more access network (radio access network, RAN) devices 20, to implement communication between a plurality of communication devices. For example, the communication system 10 is a communication system that supports the $4^{th}$ generation (the $4^{th}$ generation, 4G) (including long term evolution (long term evolution, LTE)) access technology, a communication system that supports a 5G (sometimes also referred to as new radio (new radio, NR)) access technology, a wireless fidelity (wireless fidelity, Wi-Fi) system, a cellular system related to the $3^{rd}$ generation partnership project ($3^{rd}$ generation partnership project, 3GPP), a communication system that supports convergence of a plurality of radio technologies, a future-oriented evolution system, or the like. This is not limited.

The following separately describes in detail the terminal device and the RAN in FIG. 1.

1. Terminal device

The terminal device may be briefly referred to as a terminal. The terminal device may be a device having a wireless transceiver function. The terminal device may be mobile or fixed. The terminal device may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal device may include a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, a vehicle-mounted device, a wearable device, a terminal device in the 5th generation (the 5th generation, 5G) network, a terminal device in a further evolved public land mobile network (public land mobile network, PLMN), or the like. The terminal device may also be referred to as user equipment (user equipment, UE) sometimes. Optionally, the terminal device may communicate with a plurality of access network devices that use different technologies. For example, the terminal device may communicate with an access network device that supports the LTE, or may communicate with an access network device that supports the 5G, or may implement dual connectivity to an access network device that supports the LTE and an access network device that supports the 5G. This is not limited in this disclosure.

In this disclosure, an apparatus configured to implement a function of the terminal device may be a terminal device, or may be an apparatus that can support the terminal device in implementing the function, for example, a chip system, a hardware circuit, a software module, or a hardware circuit and a software module. The apparatus may be installed in the terminal device or may be matched with the terminal device for usage. In the technical solutions provided in this disclosure, an example in which an apparatus configured to implement a function of the terminal device is a terminal device, and the terminal device is UE is used to describe the technical solutions provided in this disclosure.

In this disclosure, the chip system may include a chip, or may include a chip and another discrete component.

2. RAN

The RAN may include one or more RAN devices, for example, a RAN device 20. An interface between the RAN device and the terminal device may be a Uu interface (or referred to as an air interface). In future communication, names of these interfaces may remain unchanged, or may be replaced with other names. This is not limited in this disclosure.

The RAN device is a node or a device that enables the terminal device to access a radio network. The RAN device may also be referred to as a network device or a base station. The RAN device includes, for example, but is not limited to: a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, (for example, a home evolved NodeB, or home NodeB, HNB), a baseband unit (baseband unit, BBU), a transmitting and receiving point (transmitting and receiving point, TRP), a transmitting point (transmitting point, TP), and/or a mobile switching center. Alternatively, the access network device may be at least one of a central unit (central unit, CU), a distributed unit (distributed unit, DU), a central unit control plane (CU control plane, CU-CP) node, a central unit user plane (CU user plane, CU-UP) node, integrated access and backhaul (integrated access and backhaul, IAB), a radio controller in a cloud radio access network (cloud radio access network, CRAN) scenario, or the like. Alternatively, the access network device may be a relay station, an access point, a vehicle-mounted device, a terminal device, a wearable device, an access network device in a 5G network, an access network device in a future evolved public land mobile network (public land mobile network, PLMN), or the like.

In this disclosure, an apparatus configured to implement a function of the access network device may be an access network device, or may be an apparatus that can support the access network device in implementing the function, for example, a chip system, a hardware circuit, a software module, or a hardware circuit and a software module. The apparatus may be installed in the access network device or may be matched with the access network device for usage. In the technical solutions provided in this disclosure, an example in which an apparatus configured to implement a function of the access network device is an access network device, and the access network device is a base station is used to describe the technical solutions provided in this disclosure.

(1) Protocol layer structure

Communication between an access network device and a terminal device complies with a specified protocol layer structure. The protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical layer (physical, PHY), or the like. For example, the user plane protocol layer structure may include at least one of the following: a service data adaptation protocol (service data adaptation protocol, SDAP) layer, a PDCP layer, an RLC layer, a MAC layer, a physical layer, and the like.

The protocol layer structure between the access network device and the terminal device may be considered as an access stratum (access stratum, AS) structure. Optionally, a non-access stratum (non-access stratum, NAS) may further exist above the AS, and is used by the access network device to forward, to the terminal device, information from a core network device, or is used by the access network device to forward, to a core network device, information from the terminal device. In this case, it may be considered that there is a logical interface between the terminal device and the core network device. Optionally, the access network device may forward the information between the terminal device and the core network device in a transparent transmission manner. For example, a NAS message may be mapped to or included in RRC signaling as an element of the RRC signaling.

Optionally, the protocol layer structure between the access network device and the terminal device may further include an artificial intelligence (artificial intelligence, AI) layer, configured to transmit data related to an AI function.

(2) Central unit (central unit, CU) and distributed unit (distributed unit, DU)

A RAN device may include a CU and a DU. This design may be referred to as CU and DU separation. A plurality of DUs may be controlled by one CU in a centralized manner. For example, an interface between the CU and the DU may be referred to as an F1 interface. A control plane (control panel, CP) interface may be F1-C, and a user plane (user panel, UP) interface may be F1-U. Specific names of the interfaces are not limited in this disclosure. The CU and the DU may be classified according to a protocol layer of a wireless network. For example, functions of a PDCP layer and protocol layers (such as an RRC layer and an SDAP layer) above the PDCP layer are set on the CU, and functions of protocol layers (such as an RLC layer, a MAC layer, and a PHY layer) below the PDCP layer are set on the DU. For another example, a function of a protocol layer above a PDCP layer is set on the CU, and functions of the PDCP layer and a protocol layer below the PDCP layer are set on the DU.

The foregoing processing functions division of the CU and the DU based on the protocol layers is merely an example, and division may alternatively be performed in another manner. For example, the CU or the DU may have functions of more protocol layers through division, and for another example, the CU or the DU may alternatively have a part of processing functions of the protocol layers through division. In a design, a part of functions of the RLC layer and a function of a protocol layer above the RLC layer are set on the CU, and a remaining function of the RLC layer and a function of a protocol layer below the RLC layer are set on the DU. In another design, division of functions of the CU or the DU may alternatively be performed based on service types or other system requirements. For example, division may be performed based on latency. A function whose processing time needs to satisfy a latency requirement is set on the DU, and a function whose processing time does not need to satisfy the latency requirement is set on the CU. Optionally, the CU may have one or more functions of the core network. For example, the CU may be disposed on a network side to facilitate centralized management.

Optionally, a radio unit (radio unit, RU) of the DU is disposed remotely. The RU has a radio frequency function. For example, the DU and the RU may be divided at the PHY layer. For example, the DU may implement higher-layer functions of the PHY layer, and the RU may implement lower-layer functions of the PHY layer. When the PHY layer is used for sending, functions of the PHY layer may include at least one of the following functions: addition of a cyclic redundancy check (cyclic redundancy check, CRC) bit, channel encoding, rate matching, scrambling, modulation, layer mapping, precoding, resource mapping, physical antenna mapping, or radio frequency sending. When the PHY layer is used for receiving, functions of the PHY layer may include at least one of the following functions: CRC check, channel decoding, de-rate matching, descrambling, demodulation, layer demapping, channel detection, resource demapping, physical antenna demapping, or radio frequency receiving. The higher-layer functions of the PHY layer may include a part of the functions of the PHY layer. The part of the functions are closer to the MAC layer. The lower-layer functions of the PHY layer may include the other part of the functions of the PHY layer. For example, the part of functions are closer to the radio frequency function. For example, the higher-layer functions of the PHY layer may include the addition of a CRC bit, the channel encoding, the rate matching, the scrambling, the modulation, and the layer mapping, and the lower-layer functions of the PHY layer may include functions of the precoding, the resource mapping, the physical antenna mapping, and the radio frequency sending. Alternatively, the higher-layer functions of the PHY layer may include the addition of a CRC bit, the channel encoding, the rate matching, the scrambling, the modulation, the layer mapping, and the precoding, and the lower-layer functions of the PHY layer may include functions of the resource mapping, the physical antenna mapping, and the radio frequency sending. For example, the higher-layer functions of the PHY layer may include the CRC check, the channel decoding, the de-rate matching, the decoding, the demodulation, and the layer demapping, and the lower-layer functions of the PHY layer may include functions of the channel detection, the resource demapping, the physical antenna demapping, and the radio frequency receiving. Alternatively, the higher-layer functions of the PHY layer may include the CRC check, the channel decoding, the de-rate matching, the decoding, the demodulation, the layer demapping, and the channel detection, and the lower-layer functions of the PHY layer may include functions of the resource demapping, the physical antenna demapping, and the radio frequency receiving.

Optionally, the functions of the CU may be further divided. To be specific, a control plane and a user plane that are of the CU are separated and implemented by different entities: a control plane CU entity (a CU-CP entity) and a user plane CU entity (a CU-UP entity). The CU-CP entity and the CU-UP entity may be separately coupled to or connected to the DU, to jointly complete a function of the RAN device.

In the foregoing architecture, signaling generated by the CU may be sent to the terminal device through the DU, or signaling generated by the terminal device may be sent to the CU through the DU. For example, signaling at the RRC or PDCP layer may be finally processed as signaling at the physical layer and sent to the terminal device, or is converted from received signaling at the physical layer. In this architecture, the signaling at the RRC layer or PDCP layer may be considered to be sent through the DU, or sent through the DU and the RU.

Optionally, any one of the DU, the CU, the CU-CP, the CU-UP, and the RU may be a software module, a hardware structure, or a combination of a software module and a hardware structure. This is not limited. Different entities may exist in different forms, which is not limited. For example, the DU, the CU, the CU-CP, and the CU-UP are software modules, and the RU is a hardware structure. These modules and methods performed by these modules also fall within the protection scope of this disclosure. For example, when the method in this disclosure is performed by the access network device, the method may be specifically performed by at least one of the CU, the CU-CP, the CU-UP, the DU, the RU, or a near-real-time RIC described below. Methods performed by the modules also fall within the protection scope of this disclosure.

It should be noted that, because a network device in this disclosure is mainly an access network device, in the following, unless otherwise specified, the "network device" may refer to an "access network device".

It should be understood that a quantity of devices in the communication system shown in FIG. 1 is merely used as an example, and this disclosure is not limited thereto. In actual application, the communication system may further include more terminal devices and more RAN devices, and may further include another device, for example, may include a core network device and/or a node configured to implement an artificial intelligence function.

The network architecture shown in FIG. 1 is applicable to communication systems of various radio access technologies (radio access technology, RAT), for example, a 4G communication system, or a 5G (or referred to as new radio (new radio, NR)) communication system, or a transition system between an LTE communication system and the 5G communication system, or a future communication system, for example, a 6G communication system. The transition system may also be referred to as a 4.5G communication system. The network architecture and a service scenario described in this disclosure are intended to describe the technical solutions in this disclosure more clearly, and do not constitute a limitation on the technical solutions provided in this disclosure. A person of ordinary skill in the art may know that, with evolution of the network architecture and emergence of new service scenarios, the technical solutions provided in this disclosure are also applicable to similar technical problems.

In addition to communication between the access network device and the terminal device, the method provided in this disclosure may also be used for communication between other communication devices, for example, communication between a macro base station and a micro base station in a wireless backhaul link, for example, communication between a first terminal device and a second terminal device in a sidelink (sidelink, SL). This is not limited. This disclosure is described by using communication between the network device and the terminal device as an example.

When sending data to the terminal device, the access network device may perform precoding based on channel state information (channel state information, CSI) fed back by the terminal device. For ease of understanding this disclosure, the following briefly describes some technical terms in this disclosure.

1. Precoding technology

When channel state information is known, an access network device may process a to-be-sent signal by using a precoding matrix that matches a channel condition. A precoded to-be-sent signal can adapt to a channel by using this technology, so that quality (for example, a signal to interference plus noise ratio (signal to interference plus noise ratio, SINR)) of a signal received by a terminal device is improved, improving a system throughput. A precoding technology is used, so that a transmitting device (for example, the access network device) and a plurality of receiving devices (for example, terminal devices) can effectively perform transmission on a same time-frequency resource, that is, multiple user multiple-input multiple-output (multiple user multiple-input multiple-output, MU-MIMO) is effectively implemented. The precoding technology is used, so that the transmitting device (for example, the access network device) and a receiving device (for example, the terminal device) can effectively perform multiple-data stream transmission on a same time-frequency resource, that is, single user multiple-input multiple-output (single user multiple-input multiple-output, SU-MIMO) is effectively implemented. It should be noted that related descriptions of the precoding technology are merely an example for ease of understanding, and is not intended to limit the protection scope of this disclosure. In a specific implementation process, the transmitting device may alternatively perform precoding in another manner. For example, when channel information (for example, but not limited to a channel matrix) cannot be obtained, precoding is performed by using a preset precoding matrix or in a weighting processing manner. For brevity, specific content thereof is not described in this specification again.

2. CSI feedback (CSI feedback)

The CSI feedback may also be referred to as a CSI report (CSI report). The CSI feedback is that in a wireless communication system, a receiver (for example, a terminal device) of data (for example, but not limited to data carried on a physical downlink shared channel (physical downlink shared channel, PDSCH)) reports, to a transmitter (for example, an access network device), information used to describe a channel attribute of a communication link. For example, the CSI report includes one or more of information such as a downlink channel matrix, a precoding matrix indicator (precoding matrix indicator, PMI), a rank indicator (rank indicator, RI), or a channel quality indicator (channel quality indicator, CQI). The foregoing content included in CSI listed above is merely an example for description, and shall not constitute any limitation on this disclosure. The CSI may include one or more of the foregoing listed content, or may include information that differs from the foregoing listed content and that is used to represent the CSI. This is not limited in this disclosure. 3. Neural network (neural network, NN).

The neural network is a specific implementation form of a machine learning technology. According to a universal approximation theorem, the neural network may theoretically approximate to any continuous function, so that the neural network has a capability of learning any mapping. In a conventional communication system, a communication module needs to be designed with rich expert knowledge. However, a neural network-based deep learning communication system may automatically discover an implicit pattern structure from a large quantity of data sets, establish a mapping relationship between data, and obtain performance better than that of a conventional modeling method.

For example, a deep neural network (deep neural network, DNN) is a neural network with a large quantity of layers. Based on different network structures and/or usage scenarios, the DNN may include a multi-layer perceptron (multi-layer perceptron, MLP), a convolutional neural network (convolutional neural network, CNN), a recurrent neural network (recurrent neural network, RNN), and the like. A specific form of the DNN is not limited in this disclosure. 4. Auto-encoder (auto-encoder, AE) network, or AE for short.

The AE network may include an encoder (encoder) and a corresponding decoder (decoder). For example, the encoder and/or the decoder are/is implemented by using a neural network (like a DNN). In this case, the encoder may also be referred to as an encoder network, and the decoder may also be referred to as a decoder network. For example, in the AE network, the encoder and the corresponding decoder may be obtained through joint training. The encoder and the decoder that are obtained through training may be used for encoding and decoding of information.

In this disclosure, unless otherwise specified, a quantity of nouns represents "a singular noun or plural nouns", that is, "one or more". "At least one" means one or more, and "a plurality of" means two or more. "And/or" is an association relationship for describing associated objects, and indicates that three relationships may exist. For example, A and/or B may indicate the following cases: Only A exists, both A and B exist, and only B exists, where A and B may be in a singular form or a plural form. When representing a feature, a character "/" may represent an "or" relationship between associated objects. For example, A/B indicates A or B. When representing an operation, the symbol "/" may further represent a division operation. In addition, in this disclosure, a symbol "$\times$" may also be replaced with a symbol "*".

Ordinal numbers such as "first" and "second" in this disclosure are used to distinguish between a plurality of objects, and are not intended to limit sizes, content, an order, a time sequence, application scenarios, priorities, importance degrees, or the like of the plurality of objects. For example, first indication information and second indication information may be same indication information, or may be different indication information. In addition, this type of names does not indicate different sizes, transmission modes, indicated content, priorities, application scenarios, importance degrees, or the like of the two pieces of indication information.

In a possible implementation, a CSI feedback mechanism uses a procedure shown in FIG. 2. S21: A base station sends signaling, and correspondingly, UE receives the signaling from the base station.

The signaling is used to configure channel measurement information. For example, the signaling notifies the UE of at least one of the following: time information for performing channel measurement, a type of a reference signal (reference signal, RS) for performing the channel measurement, a time domain resource of the reference signal, a frequency domain resource of the reference signal, a reporting condition of a measurement quantity, and the like.

S22: The base station sends the reference signal to the UE, and correspondingly, the UE receives the reference signal from the base station.

The UE measures the reference signal to obtain CSI.

S23: The UE sends the CSI to the base station, and correspondingly, the base station receives the CSI from the UE.

S24: The base station sends data to the UE based on the CSI, and correspondingly, the UE receives the data from the base station.

The base station determines a precoding matrix based on the CSI, and performs precoding, by using the precoding matrix, on the data to be sent to the UE. The data sent by the base station to the UE is carried on a downlink channel, for example, carried on a PDSCH.

When accuracy of the CSI fed back by the UE is higher, information is more abundant, and a downlink channel reconstructed by the base station based on the CSI is more accurate. In this case, the precoding matrix determined by the base station is more accurate, downlink spatial multiplexing performance is better, a received signal to interference plus noise ratio of the UE is higher, and a system throughput is higher. However, as a scale of a MIMO system antenna array continuously increases, a quantity of antenna ports that can be supported also increases. Because a size of a complete downlink channel matrix is in direct proportion to a quantity of antenna ports, in a large-scale MIMO system, to make the CSI fed back by UE have high accuracy, huge feedback overheads are required. Because of the huge feedback overheads, available resources for data transmission are reduced. Consequently, a system capacity is reduced. Therefore, to improve the system capacity, how to reduce the CSI feedback overheads needs to be studied. Feeding back the CSI based on a dual-domain compressed codebook is a manner that can effectively reduce the feedback overheads.

The dual-domain compressed codebook is generally designed based on factors such as an assumed antenna panel form and quantity of subbands. However, in an actual communication environment, because a channel environment is complex and changeable and actual antenna panel forms are diversified, a codebook determined for a fixed antenna panel form and quantity of subbands may not necessarily satisfy the actual communication environment, and the accuracy of the CSI fed back by the UE is reduced. Therefore, how to make the CSI fed back by the UE more accurate is a technical problem worth studying.

In view of this, the technical solutions of this disclosure are provided. In this disclosure, each of M pieces of first downlink channel sub-data obtained by the UE may correspond to one data space in M data spaces, and first information corresponding to all pieces of first downlink channel sub-data may be determined based on dictionaries corresponding to different data spaces. Different data spaces can represent different location information, that is, different data spaces can represent different channel environment information. The UE feeds back first information corresponding to different data spaces, so that an access network device can determine a correspondence between first information and environment information. In this case, the first information fed back by the UE can reflect an actual communication environment, and accuracy of the first information fed back by the UE is improved. The access network device can reconstruct an accurate downlink channel based on the first information fed back by the UE.

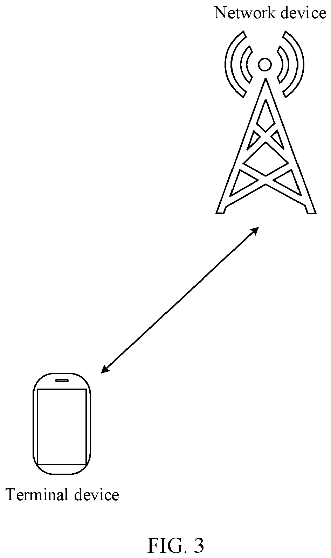

FIG. 3 show a communication network architecture in the communication system 10 provided in this disclosure. Any embodiment provided subsequently is applicable to the architecture. A network device included in FIG. 3 is, for example, an access network device 20 included in the communication system 10, and a terminal device included in FIG. 3 is, for example, the communication apparatus 30 included in the communication system 10. The network device can communicate with the terminal device.

This disclosure may relate to a machine learning technology. The machine learning technology is a specific implementation of an AI technology. For ease of understanding, the following describes the AI technology. It may be understood that the descriptions are not intended to limit this disclosure.

AI is a technology that performs complex calculation by simulating a human brain. With improvement of data storage and capabilities, the AI is increasingly applied.

In this disclosure, an independent network element (for example, referred to as an AI network element, an AI node, or an AI device) may be introduced into the communication system shown in FIG. 1 to implement an AI function. The AI network element may be directly connected to the access network device, or may be indirectly connected to the access network device via a third-party network element. Optionally, the third-party network element may be a core network element. Alternatively, an AI entity may be configured or disposed in another network element in the communication system, to implement an AI-related operation. The AI entity may also be referred to as an AI module, an AI unit, or another name, and is mainly configured to implement some or all of AI functions. A specific name of the AI entity is not limited in this disclosure. Optionally, the another network element may be the access network device, a core network device, a network managing device (operation, administration and maintenance, OAM), or the like. In this case, a network element that performs the AI function is a network element with a built-in AI function. In this disclosure, the AI function may include at least one of the following: data collection, model training (or model learning), model information release, model inference (or referred to as model inference, inference, prediction, or the like), model monitoring or model checking, inference result release, or the like. The AI function may also be referred to as an AI (related) operation or an AI-related function.

In this disclosure, an OAM network element (a network managing device of the core network device) is configured to operate, administrate, and/or maintain the core network device, and/or an OAM network element (a network managing device of the access network device) is configured to operate, administrate, and/or maintain the access network device. For example, this disclosure includes a first OAM network element and a second OAM network element, where the first OAM network element is a network managing device of the core network device, and the second OAM network element is a network managing device of the access network device. Optionally, the first OAM network element and/or the second OAM network element include/includes an AI entity. For another example, this disclosure includes a third OAM network element, and the third OAM network element is a network managing device of both the core network device and the access network device. Optionally, the third OAM network element includes an AI entity.

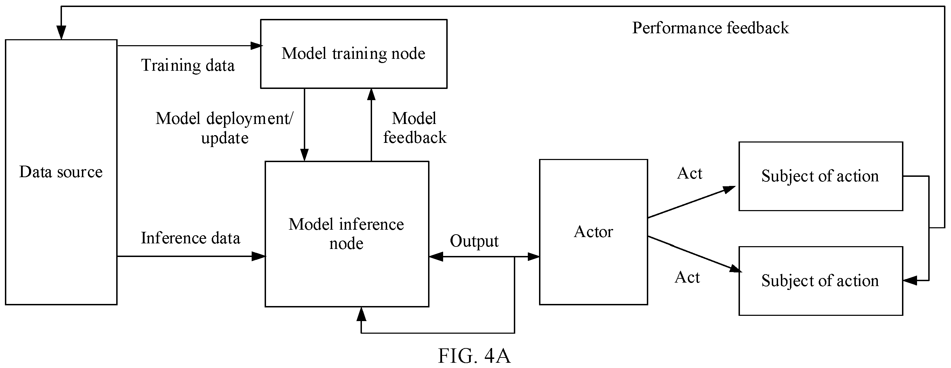

FIG. 4A is a diagram of a first application framework of AI in a communication system. A data source (data source) is used to store training data and inference data. A model training node (model training host) performs training or update training on the training data (training data) provided by the data source, to obtain an AI model, and deploys the AI model in a model inference node (model inference host). The AI model represents a mapping relationship between an input and an output of the model. Obtaining the AI model through learning by the model training node is equivalent to obtaining the mapping relationship between the input and the output of the model through learning by the model training node by using training data. The model inference node uses the AI model to perform inference based on the inference data provided by the data source, to obtain an inference result. The method may also be described as follows: The model inference node inputs the inference data to the AI model, and obtains an output via the AI model. The output is the inference result. The inference result may indicate a configuration parameter used (acted) by a subject of action, and/or an operation performed by a subject of action. The inference result may be uniformly planned by an actor (actor) entity, and sent to one or more subjects of action (for example, a core network element, a base station, or UE) for action. Optionally, the model inference node may feed back the inference result of the model inference node to the model training node. This process may be referred to as model feedback. The fed-back inference result is used by the model training node to update the AI model, and an updated AI model is deployed on the model inference node. Optionally, the subject of action may feed back a network parameter collected by the subject of action to the data source. This process may be referred to as performance feedback, and the fed-back network parameter may be used as the training data or the inference data.

For example, the AI model includes a decoder network in an AE network. The decoder network is deployed on an access network device side. An inference result of the decoder network is, for example, used for reconstruction of a downlink channel matrix. The AI model includes an encoder network in the AE network. The encoder network is deployed on a UE side. An inference result of the encoder network is, for example, used for encoding of a downlink channel matrix.

The application framework shown in FIG. 4A may be deployed in the network element shown in FIG. 1. For example, the application framework in FIG. 4A may be deployed in at least one of the terminal device, the access network device, the core network device (not shown), or an independently deployed AI network element (not shown) in FIG. 1. For example, the AI network element (which may be considered as the model training node) may analyze or train training data (training data) provided by the terminal device and/or the access network device, to obtain a model. At least one (which may be considered as the model inference node) of the terminal device, the access network device, or the core network device may perform inference by using the model and inference data, to obtain an output of the model. The inference data may be provided by the terminal device and/or the access network device. An input of the model includes the inference data, and the output of the model is an inference result corresponding to the model. At least one (which may be considered as the subject of action) of the terminal device, the access network device, or the core network device may perform a corresponding operation based on the inference result. The model inference node and the subject of action may be the same or may be different. This is not limited.

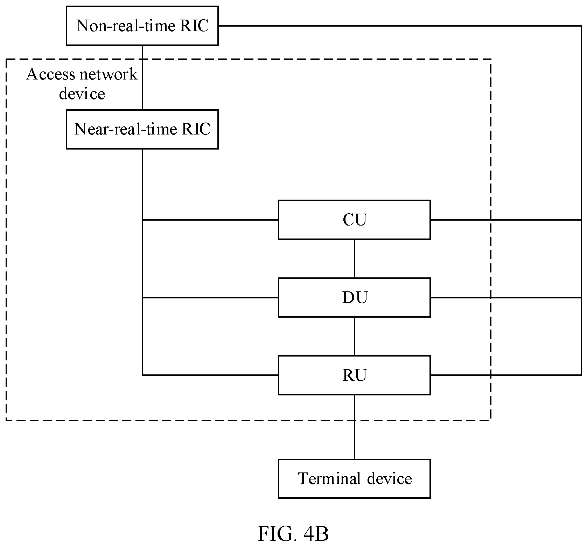

With reference to FIG. 4B to FIG. 4E, the following describes, by using examples, a network architecture to which the method provided in this disclosure can be applied.

As shown in FIG. 4B, in a first possible implementation, an access network device includes a near-real-time radio access network intelligent controller (RAN intelligent controller, RIC) module, configured to perform model training and inference. For example, a near-real-time RIC may be configured to: train an AI model, and perform inference by using the AI model. For example, the near-real-time RIC may obtain information on a network side or a terminal side from at least one of a CU, a DU, or an RU, and the information may be used as training data or inference data. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU.

As shown in FIG. 4B, in a second possible implementation, a non-real-time RIC is located outside an access network device (optionally, the non-real-time RIC may be located in an OAM network element or a core network device), and is configured to perform model training and inference. For example, the non-real-time RIC is configured to: train an AI model, and perform inference by using the model. For example, the non-real-time RIC may obtain information on a network side and/or a terminal side from at least one of a CU, a DU, or an RU. The information may be used as training data or inference data, and an inference result may be submitted to at least one of the CU, the DU, the RU, or a terminal device. Optionally, the CU and the DU may exchange the inference result. Optionally, the DU and the RU may exchange the inference result. For example, the non-real-time RIC submits the inference result to the DU, and the DU forwards the inference result to the RU.

As shown in FIG. 4B, in a third possible implementation, an access network device includes a near-real-time RIC, and a non-real-time RIC is located outside the access network device (optionally, the non-real-time RIC may be located in an OAM network element or a core network device). Same as the non-real-time RIC in the second possible implementation, the non-real-time RIC may be configured to perform model training and inference; and/or same as the near-real-time RIC in the first possible implementation, the near-real-time RIC may be configured to perform model training and inference; and/or the non-real-time RIC performs model training, and the near-real-time RIC may obtain AI model information from the non-real-time RIC, obtain information on a network side and/or a terminal side from at least one of a CU, a DU, or an RU, and obtain an inference result based on the information and the AI model information. Optionally, the near-real-time RIC may submit the inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is configured to: train a model A, and perform inference by using the model A. For example, the non-real-time RIC is configured to: train a model B, and perform inference by using the model B. For example, the non-real-time RIC is configured to: train a model C, and send information about the model C to the near-real-time RIC, and the near-real-time RIC performs inference by using the model C.

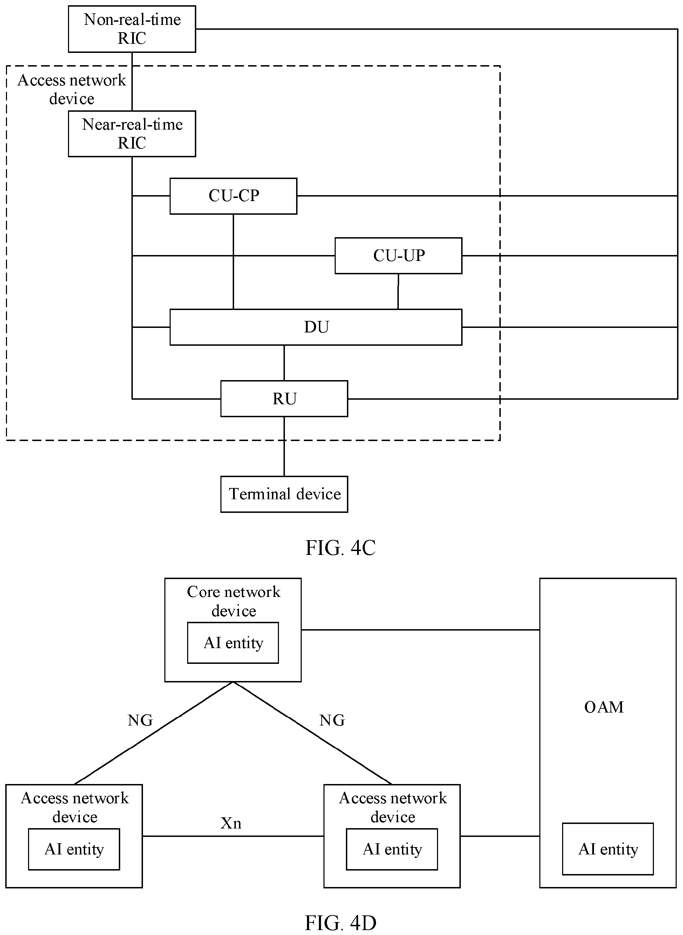

FIG. 4C is an example diagram of a network architecture to which a method according to this disclosure can be applied. Compared with that in FIG. 4B, in FIG. 4C, a CU is separated into a CU-CP and a CU-UP.

FIG. 4D is an example diagram of a network architecture to which a method according to this disclosure can be applied. As shown in FIG. 4D, optionally, an access network device includes one or more AI entities, and a function of the AI entity is similar to that of the near-real-time RIC.

Optionally, an OAM network element includes one or more AI entities, and a function of the AI entity is similar to that of the non-real-time RIC. Optionally, a core network device includes one or more AI entities, and a function of the AI entity is similar to that of the non-real-time RIC. When the OAM network element and the core network device each include an AI entity, models obtained by training by using the AI entities of the OAM and the core network device are different, and/or models used for inference are different.

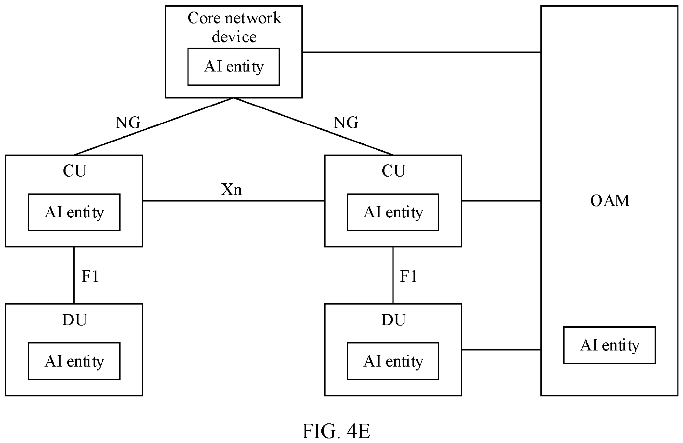

In this disclosure, a model difference includes at least one of the following differences: a structure parameter (for example, at least one of a neural network layer quantity, a neural network width, a connection relationship between layers, a weight of a neuron, an activation function of a neuron, or a bias in an activation function) of a model, an input parameter (for example, a type of the input parameter and/or a dimension of the input parameter) of a model, or an output parameter (for example, a type of the output parameter and/or a dimension of the output parameter) of a model. FIG. 4E is an example diagram of a network architecture to which a method according to this disclosure can be applied. Compared with that in FIG. 4D, in FIG. 4E, an access network device is separated into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained by training by using the AI entities of the CU and the DU are different, and/or models used for inference are different. Optionally, the CU in FIG. 4E may be further split into a CU-CP and a CU-UP. Optionally, one or more AI models may be deployed in the CU-CP. Optionally, one or more AI models may be deployed in the CU-UP.

In FIG. 4D or FIG. 4E, an OAM network element of the access network device and an OAM network element of the core network device are uniformly deployed. Alternatively, as described above, in FIG. 4D or FIG. 4E, an OAM network element of the access network device and an OAM network element of the core network device may be separately deployed.

In this disclosure, one model may obtain one output through inference, and the output includes one or more parameters. Learning processes or training processes of different models may be deployed on different devices or nodes, or may be deployed on a same device or node. Inference processes of different models may be deployed on different devices or nodes, or may be deployed on a same device or node.

Optionally, the AI model includes a decoder network in an AE network. On a network side, an inference result of the decoder network is, for example, used for reconstruction of a downlink channel matrix. Optionally, the AI model includes an encoder network in the AE network, and model information of the encoder network may be sent to UE for the UE to perform inference.

It should be noted that, in the frameworks in FIG. 4A to FIG. 4E, the AI model may be referred to as a model, a network model, or the like for short, and may be considered as a mapping from an input parameter (for example, an input matrix) to an output parameter (for example, an output matrix). For example, for the decoder network on the network side, the input matrix may be a matrix determined based on received CSI. The training data may include a known input matrix, or include a known input matrix and a corresponding output matrix, and is used to train the AI model. The training data may be data from the access network device, the CU, the CU-CP, the CU-UP, the DU, the RU, the UE, and/or another entity, and/or data inferred by using an AI technology. This is not limited. The inference data includes an input matrix, and is used to infer an output matrix by using the model. The inference data may be data from the access network device, the CU, the CU-CP, the CU-UP, the DU, the RU, the UE, and/or another entity. The inferred matrix may be considered as policy information, and is sent to the subject of action. The inferred matrix may be sent to the access network device, the CU, the CU-CP, the CU-UP, the DU, the RU, the UE, or the like, for further processing, for example, for reconstruction of the downlink channel matrix.

In this disclosure, if the decoder network in the AE network is deployed on the network side, the decoder network may be deployed in the access network device (for example, the base station) or outside the access network device, for example, deployed in the OAM network element, the AI network element, or the core network device, or deployed in the RU, the DU, or the near-real-time RIC. This is not limited. The inference result of the decoder network may be obtained by the access network device through inference, or may be sent to the access network device after the non-real-time RIC performs inference. For brevity of descriptions, this disclosure is described by using an example in which the decoder network is deployed in the access network device.

In this disclosure, if the encoder network in the AE network is deployed on the terminal side, the encoder network may be deployed in the UE, and the UE may perform inference by using the encoder network.

The following describes the methods provided in this disclosure with reference to the accompanying drawings. Steps or operations included in these methods are merely examples, and other operations or variations of various operations may be further performed in this disclosure. In addition, the steps may be performed in a sequence different from a sequence presented in this disclosure, and possibly, not all the operations need to be performed.

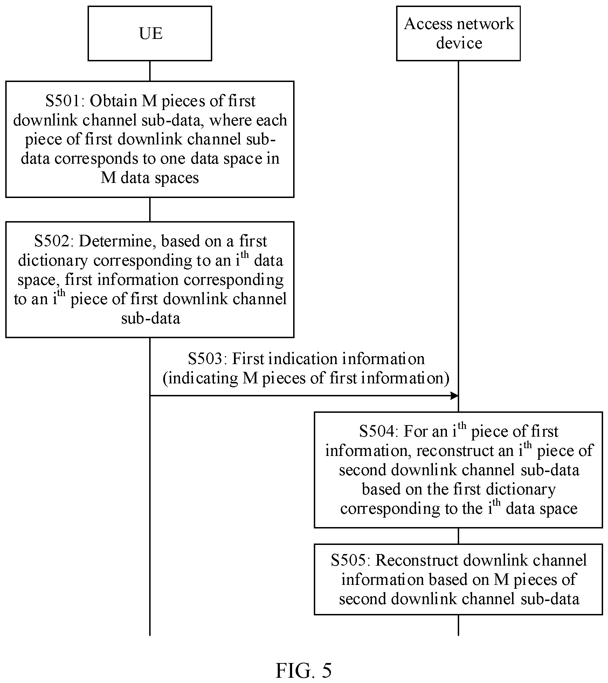

FIG. 5 is a flowchart of a communication method according to this disclosure.

S501: UE obtains M pieces of first downlink channel sub-data, where each piece of first downlink channel sub-data corresponds to one data space in M data spaces. M is an integer greater than 1.

The M pieces of first downlink channel sub-data are, for example, obtained based on first downlink channel data. For example, the UE may divide and allocate the first downlink channel data into the M data spaces, or it is understood as that the UE may divide the first downlink channel data into M parts, to obtain the M pieces of first downlink channel sub-data. That each piece of first downlink channel sub-data corresponds to one data space may also be understood as that the data space one-to-one corresponds to the first downlink channel sub-data. The first downlink channel data is, for example, original downlink channel data (or referred to as an original downlink channel matrix or a downlink channel response). In other words, after obtaining the original downlink channel data, the UE may directly divide the original downlink channel data into the M parts without performing other processing on the original downlink channel data. In this case, processing steps can be reduced. Alternatively, the first downlink channel data may be data obtained by preprocessing second downlink channel data, and the second downlink channel data is obtained based on an original downlink channel matrix. In this case, original downlink channel data can be simplified by a preprocessing process, to simplify a process of processing the first downlink channel data by the UE. Alternatively, the first downlink channel data may be data output by a neural network, for example, content such as an original downlink channel matrix is invisible to the UE, and the UE directly obtains the first downlink channel data output by the neural network. If the first downlink channel data is obtained by preprocessing the second downlink channel data, the preprocessing process is involved. The second downlink channel data is obtained based on the original downlink channel matrix. For example, the second downlink channel data is the original downlink channel matrix, or the second downlink channel data is an eigenvector obtained by processing the original downlink channel matrix. For different implementations of the second downlink channel data, preprocessing processes may be different. These are described below. 1. The second downlink channel data is the original downlink channel matrix. For example, the original downlink channel matrix is referred to as a first downlink channel matrix.

For example, a dimension of the first downlink channel matrix is $[N_{tx}, N_{rx}, N_{RB}]$, where $N_{tx}$ represents a quantity of antennas or ports at a transmitter (for example, an access network device) of a downlink signal, $N_{rx}$ represents a quantity of antennas or ports at a receiver (for example, the UE) of the downlink signal, and $N_{RB}$ represents a quantity of frequency domain units, for example, a quantity of resource blocks (resource blocks, RBs) or a quantity of subbands.

Optionally, further, the UE may perform dimension transformation processing on the first downlink channel matrix, to obtain transformed data, that is, obtain a transformed first downlink channel matrix. A dimension of the transformed first downlink channel matrix is $[N_{tx} * N_{rx}, N_{RB}]$ or $[N_{tx}N_{rx}, N_{RB}]$. For example, the matrix is represented by $H$, where $H$ is a complex matrix, namely, $H \in \mathcal{C}^{N_{tx}N_{rx} * N_{RB}}$. Optionally, the first downlink channel data is, for example, the matrix $H$.

Optionally, further, two groups of DFT base may be generated through discrete Fourier transform (discrete Fourier transform, DFT): a spatial domain basis $S \in \mathcal{C}^{NtxNrx*NtxNrx}$ and a frequency domain basis $F \in \mathcal{C}^{Nrb*Nrb}$. The spatial domain basis is $N_{tx}N_{rx}$ $N_{tx}N_{rx}*1$ DFT column vectors, and the frequency domain basis is $N_{rb}$ $N_{rb}*1$ DFT column vectors. The UE may perform spatial-frequency joint projection on a dimension-reduced first downlink channel matrix $H$ based on the spatial domain basis and the frequency domain basis. For a manner of the spatial-frequency joint projection, refer to the following formulas:

$$C_{complex} = S^H * H * F, \ C_{complex} \in \mathcal{C}^{NtxNrx*Nsb} \qquad \text{(Formula 1)}$$

After the complex matrix $C_{complex}$ is obtained, the preprocessing process of the second downlink channel data is completed. Herein, $S^H$ is a Hermitian (Hermitian) matrix of $S$, which is also referred to as a self-conjugate matrix, and may be obtained by performing conjugate transposition on the matrix S. $N_{sb}$ represents a quantity of frequency domain subbands, for example, $N_{sb} = N_{rb}/a$, where $a$ represents a frequency domain subband granularity or a subband bandwidth, namely, a quantity of RBs included in each subband. A common frequency domain subband granularity is 1 RB, 2 RBs, 4 RBs, 8 RBs, or the like. This is not limited herein. For example, if the frequency domain subband granularity is 4 RBs, $N_{sb} = N_{rb}/4$. S represents the spatial domain basis, and a specific form of S is related to an antenna panel. It is assumed that the antenna panel is dual-polarized, a horizontal element is $Nh$, and a vertical element is $Nv$, an obtained representation form of S is as follows:

$$S = \begin{bmatrix} kron(DFT(Nv), DFT(Nh)) & 0 \\ 0 & kron(DFT(Nv), DFT(Nh)) \end{bmatrix} \qquad \text{(Formula 2)}$$

F represents the frequency domain basis, and a representation form of F is related to a subband $N_{sb}$. For example, F may satisfy the following formula:

$$F = DFT(N_{sb}) \qquad \text{(Formula 3)}$$

Optionally, in a DFT process, an oversampling factor may be further added. For example, a plurality of groups of orthogonal spatial domain base $\{S_1, S_2, S_3 ...\}$ and a plurality of groups of orthogonal frequency domain base $\{F_1, F_2, F_3 ...\}$ may be generated in an oversampling manner, and a group of $S_i$ and $F_j$ are selected from the groups as the spatial domain basis and the frequency domain basis of this disclosure. For example, a group with an accurate projection direction may be selected from the groups. For example, oversampling factors in the spatial domain and the frequency domain each are 4.

Optionally, the first downlink channel data is, for example, a complex matrix obtained by preprocessing the second downlink channel data, for example, the complex matrix $C_{complex}$. 2. The second downlink channel data is the eigenvector obtained by processing the first downlink channel matrix.

In this case, the first downlink channel matrix needs to be first processed, to obtain the eigenvector, and then the eigenvector is preprocessed, to obtain the first downlink channel data. Alternatively, it may be understood as that a process of processing the first downlink channel matrix to obtain the eigenvector and a process of preprocessing the eigenvector to obtain the first downlink channel data are both considered as a preprocessing process of the first downlink channel matrix.

For example, a dimension of the first downlink channel matrix is $[N_{tx}, N_{rx}, N_{RB}]$, and dimension reduction is performed on the $[N_{tx}, N_{rx}, N_{RB}]$-dimensional first downlink channel matrix through singular value decomposition (singular value decomposition, SVD), to obtain an eigen-subspace matrix (or referred to as an eigen-subspace for short) of a downlink channel. A dimension of the eigen-subspace is $[N_{tx}, N_{sb}]$. When performing dimension reduction on the first downlink channel matrix through SVD, the UE may separately process different ranks (ranks) of the first downlink channel matrix, where different ranks may also be understood as different streams or different layers (layers). One piece of channel information (or one channel estimation result) may correspond to one or more layers. The following describes a process in which the UE processes an $L^{th}$ layer of the first downlink channel matrix. There may be a plurality of methods. This is not limited.

Each subband at the $L^{th}$ layer may include a RBs, and the UE may calculate an equivalent downlink channel in one subband with reference to downlink channels of the a RBs. It is assumed that a downlink channel corresponding to a $k^{th}$ RB in a subband c at the $L^{th}$ layer is represented as $H_k$, an equivalent downlink channel in the subband c may

be represented as:

$$\widetilde{R_{UU}} = \sum_{k=0}^{a-1} H_k{}^H H_k \qquad \text{(Formula 4)}$$

The UE performs SVD on $\widetilde{R_{UU}}$, and the following can be obtained.

$$[U \lambda \widetilde{V}] = \text{SVD}(\widetilde{R_{UU}}) \qquad \text{(Formula 5)}$$

To be specific, $\widetilde{R_{UU}} = U\lambda\widetilde{V}^H$. Herein, a dimension of $H_k$ is $[N_{tx} * N_{rx}]$, and a dimension of $\widetilde{R_{UU}}$ is $[N_{tx} * Ntx]$. A $k^{th}$ column of the matrix $\widetilde{V}$ may be used as an $L^{th}$-layer eigenvector corresponding to the subband c (to avoid confusion, an eigenvector corresponding to a subband is referred to as a sub-eigenvector), and a dimension of the $L^{th}$-layer eigenvector is $[N_{tx} * 1]$, that is, a sub-eigenvector of the subband c at the $L^{th}$ layer is $V_c = \widetilde{V}(:,k)$. A sub-eigenvector of each subband at the $L^{th}$ layer may be obtained in a similar manner. These sub-eigenvectors are concatenated to obtain an eigenvector, and the eigenvector may be used as input data in this disclosure. For example, the eigenvector may be represented as $V = [V_1 \ V_2 \ ... \ V_a]$. Optionally, the first downlink channel data is, for example, the eigenvector $V$, and a dimension of the eigenvector $V$ is $[N_{rx}, N_{RB}]$.

Optionally, further, it is assumed that the eigenvector $V \in \mathcal{C}^{Ntx*Nsb}$ is a complex matrix, and two groups of DFT base may be generated through DFT: a spatial domain basis $S \in \mathcal{C}^{Ntx*Ntx}$ and a frequency domain basis $F \in \mathcal{C}^{Nsb*Nsb}$. The spatial domain basis is $N_{tx}$ $N_{tx} * 1$ DFT column vectors, and the frequency domain basis is $N_{sb}$ $N_{sb} * 1$ DFT column vectors. The UE may perform spatial-frequency joint projection on a dimension-reduced downlink channel matrix $H$ based on the spatial domain basis and the frequency domain basis. For a manner of the spatial-frequency joint projection, refer to the following formulas:

$$C_{complex} = S^H * V * F, \ C_{complex} \in \mathcal{C}^{Ntx*Nsb} \qquad \text{(Formula 6)}$$

The obtained complex matrix $C_{complex}$ is a sparse representation of an eigen-subspace of an original downlink channel, and a dimension of the complex matrix is consistent with a dimension of an eigenvector existing before spatial-frequency joint projection, and is $N_{tx} * N_{sb}$. After the complex matrix $C_{complex}$ is obtained, the preprocessing process of the second downlink channel data is completed. For descriptions of parameters such as $S^H$, $N_{sb}$, and the spatial domain basis $S$, refer to the foregoing descriptions.

Optionally, in a DFT process, an oversampling factor may be further added. For example, a plurality of groups of orthogonal spatial domain base $\{S_1, S_2, S_3 ...\}$ and a plurality of groups of orthogonal frequency domain base $\{F_1, F_2, F_3 ...\}$ may be generated in an oversampling manner, and a group of $S_i$ and $F_j$ are selected from the groups as the spatial domain basis and the frequency domain basis of this disclosure. For example, a group with an accurate projection direction may be selected from the groups. For example, oversampling factors in the spatial domain and the frequency domain each are 4. After obtaining the complex matrix $C_{complex}$ in either of the two manners, the UE may obtain the first downlink channel data based on the complex matrix $C_{complex}$. Optionally, a manner in which the UE obtains the first downlink channel data based on the complex matrix $C_{complex}$ is that the UE directly uses the complex matrix $C_{complex}$ as the first downlink channel data, that is, the first downlink channel data is a result of preprocessing the second downlink channel data.

Alternatively, another manner in which the UE obtains the first downlink channel data based on the complex matrix $C_{complex}$ is that the UE may select some data from the complex matrix $C_{complex}$ as the first downlink channel data. For example, in a frequency domain direction (delay domain), energy is generally mainly concentrated around delay=0, and energy in another area may be basically ignored. Therefore, the UE may select F consecutive columns on two sides of the delay=0 as the first downlink channel data, and a coefficient of a remaining part may be 0 by default. For example, the UE may select F consecutive columns from the complex matrix $C_{complex}$ as the first downlink channel data, and may not process a column that is not selected from the complex matrix $C_{complex}$. In this case, energy distribution is considered, and processing overheads can be reduced.

For example, F is a positive integer, and a value of F may be predefined in a protocol, or different F may be determined based on different overheads. For example, a mapping relationship between an overhead and F may be provided in the protocol, so that the UE and the access network device can determine same F based on a current overhead requirement. Alternatively, a value of F may be indicated by the access network device. For example, the access network device sends, to the UE, information indicating the value of F. The UE can determine the value of F after receiving the information. Alternatively, a value of F may be determined by the UE. For example, the UE determines the value of F based on factors such as a channel state and/or a network form, to reduce impact on air interface transmission. After determining the value of F, the UE may send, to the access network device, information indicating the value of F. The access network device can determine the value of F after receiving the information.

Alternatively, still another manner in which the UE obtains the first downlink channel data based on the complex matrix $C_{complex}$ is that the UE may perform compression processing on the complex matrix $C_{complex}$, to obtain compressed information, where the compressed information may be used as the first downlink channel data. For example, the UE may input the complex matrix $C_{complex}$ into an encoder network, the encoder network performs compression processing on the complex matrix $C_{complex}$, and the encoder network outputs the compressed information. In this manner, the first downlink channel data is obtained through compression. This can reduce complexity of processing the first downlink channel data by the UE.

The foregoing processes are to obtain the first downlink channel data. After obtaining the first downlink channel data, the UE may divide and allocate the first downlink channel data into the M data spaces, to obtain the M pieces of first downlink channel sub-data. The first downlink channel sub-data one-to-one corresponds to the data space. For example, an i$^{th}$ piece of first downlink channel sub-data in the M pieces of first downlink channel sub-data corresponds to an i$^{th}$ data space in the M data spaces, and i may be an integer from 1 to M.

In this disclosure, the M data spaces are involved, and the M data spaces may correspond to a dictionary. For example, the M data spaces may correspond to N dictionaries, and N is an integer greater than or equal to 1 and less than or equal to M. Optionally, N=M, that is, the data space one-to-one corresponds to the dictionary, and each data space corresponds to one dictionary; or N=1, that is, the M data spaces all correspond to a same dictionary, and it may be considered that the dictionary corresponds to each data space. Optionally, N=M/2, where every two data spaces correspond to one dictionary. Other possible cases are not described one by one. Different data spaces may correspond to a same dictionary or may correspond to different dictionaries. This is not limited. A usage of the dictionary is described in S502 below. In addition, the M data spaces (or a division manner of the M data spaces) are also involved in a training process of the dictionary. The training process of the dictionary is described in subsequent embodiments. Therefore, the division manner of the M data spaces and the like are also described in the subsequent embodiments.

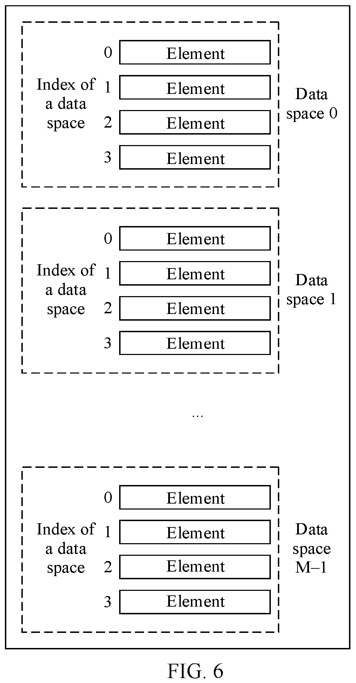

A variable stored in a dictionary includes at least one of {an index of a data space, an index of an element, the element}, that is, the variable stored in a dictionary may include one or more of the index of a data space, the index of an element, or the element. In addition, the dictionary may further include other information, or may not include other information. This is not limited. An index of a data space included in a dictionary is an index of a data space corresponding to the dictionary. For example, if the dictionary one-to-one corresponds to the data space, one dictionary corresponds to one data space, and a dictionary includes an index of a data space corresponding to the dictionary. Alternatively, if the M data spaces all correspond to a same dictionary, the dictionary corresponds to the M data spaces, and the dictionary may not include indexes of the data spaces. The element is, for example, a vector, and a dictionary may include a plurality of elements. Each element may have a corresponding index, that is, an element may one-to-one correspond to an index of the element. If N is greater than 1, indexes of elements included in different dictionaries may be reused. For example, indexes of elements in each dictionary may start from 1 or 0, that is, the elements included in the different dictionaries are numbered independently. Alternatively, indexes of elements included in different dictionaries may be different, that is, the elements included in the different dictionaries are jointly numbered. For example, indexes of elements in a 1$^{st}$ dictionary are 0 to d-1, and indexes of elements in a 2$^{nd}$ dictionary start from d. FIG. 6 is a diagram of N dictionaries. In FIG. 6, N=M is used as an example, that is, M dictionaries are included in total. In FIG. 6, 0 to 3 in each dictionary represent indexes of elements. Herein, that a quantity of the indexes of elements included in each dictionary is 4 is used as an example. This is not limited actually. In addition, quantities of the elements included in the different dictionaries may be the same or may be different.

Optionally, a dictionary expression manner further includes: If N is between 1 and M, a dictionary may include {an index of the dictionary, an index of an element, the element}, and a correspondence between an index of a dictionary and an index of a data space may be interoperable between the access network device and the terminal device. If N=1, the index of the dictionary can be omitted. By default, indexes of all data spaces correspond to the dictionary. If M>N>1, the correspondence between an index of a dictionary and an index of a data space may be a default rule predefined in the protocol. For example, M=4 and N=2, in the rule, an index 0 of a data space and an index 2 of a data space correspond to an index 0 of a dictionary, and an index 1 of a data space and an index 3 of a data space correspond to an index 1 of a dictionary. Alternatively, if M>N>1, the access network device may indicate the correspondence between an index of a dictionary and an index of a data space to the UE. Alternatively, if M>N>1, the UE may report the correspondence between an index of a dictionary and an index of a data space to the access network device. If M=N, the index of the dictionary may one-to-one correspond to the index of the data space, or the dictionary may include {an index of a data space, an index of an element, the element}. S502: The UE determines, based on a first dictionary corresponding to the $i^{th}$ data space in the M data spaces, first information corresponding to the $i^{th}$ piece of first downlink channel sub-data in the M pieces of first downlink channel sub-data, i is an integer from 1 to M. Therefore, the UE determines M pieces of first information in total.

The $i^{th}$ piece of first downlink channel sub-data corresponds to the $i^{th}$ data space in the M data spaces. For example, if the first downlink channel data is divided and allocated into the M data spaces, the M pieces of first downlink channel sub-data are obtained, where the $i^{th}$ piece of first downlink channel sub-data is a part that is of the first downlink channel data and that is divided and allocated into the $i^{th}$ data space. For example, N=M, and each data space has a dictionary corresponding to the data space. In this case, the first dictionary is, for example, a dictionary corresponding to the $i^{th}$ data space in the M data spaces, that is, the UE may determine, based on the first dictionary corresponding to the $i^{th}$ data space, the first information corresponding to the $i^{th}$ piece of first downlink channel sub-data. If i is an integer from 1 to M, dictionaries corresponding to different data spaces may be referred to as first dictionaries, but the first dictionaries corresponding to the different data spaces may be the same or may be different. Alternatively, if N=1, and one dictionary corresponds to the M data spaces, the first dictionary is the dictionary. For any data space in the M data spaces, the first dictionary is used, and the UE may determine, based on the first dictionary, the first information corresponding to the $i^{th}$ piece of first downlink channel sub-data.

If N=1, the UE may determine that the dictionary is the first dictionary corresponding to the $i^{th}$ data space. Alternatively, if M=N, and the dictionary one-to-one corresponds to the data space, the UE can determine the first dictionary corresponding to the $i^{th}$ data space. Alternatively, if M>N>1, the UE may determine, based on the correspondence between an index of a dictionary and an index of a data space, the first dictionary corresponding to the $i^{th}$ data space. For example, M=4 and N=2. The correspondence specifies that the index 0 of the data space and the index 2 of the data space correspond to the index 0 of the dictionary, and the index 1 of the data space and the index 3 of the data space correspond to the index 1 of the dictionary. i is equivalent to the index of the data space. In this case, the UE may determine, based on a value of i and the correspondence, the first dictionary corresponding to the $i^{th}$ data space. For example, if i=1, the UE may determine that a first dictionary corresponding to a $1^{st}$ data space is a dictionary indicated by the index 1 of the dictionary.

It can be learned from the foregoing descriptions of the dictionary that the first dictionary may include a plurality of elements, and the UE may determine, from the plurality of elements, P elements corresponding to the $i^{th}$ piece of first downlink channel sub-data, where P is a positive integer. For example, in the plurality of elements included in the first dictionary, P elements most related to the $i^{th}$ piece of sub-data are the P elements corresponding to the $i^{th}$ piece of first downlink channel sub-data, and the P elements may be used as the first information corresponding to the $i^{th}$ piece of first downlink channel sub-data. If P is greater than 1, the P elements may form the first information in a first combination manner. For example, the first combination manner is multiplying the P elements, or the first combination manner is performing weighted summation (for example, averaging, or performing weighted summation by using other possible weight values) on the P elements, or connecting the P elements in series. The first combination manner is not limited. For example, the first combination manner is predefined in the protocol, or is determined and notified to the UE by the access network device, or is determined and notified to the access network device by the UE. For the M pieces of first downlink channel sub-data, the UE may determine first information corresponding to the M pieces of first downlink channel sub-data, and the UE may determine the M pieces of first information in total, where the M pieces of first information are M elements.

S503: The UE sends first indication information. For example, the UE sends the first indication information to the access network device, and correspondingly, the access network device may receive the first indication information from the UE. The first indication information may indicate the M pieces of first information, and the access network device can determine the M pieces of first information based on the first indication information.

Optionally, the first indication information includes identifiers of the M pieces of first information, so that the M pieces of first information can be indicated. An identifier of one piece of first information is, for example, an index of the first information in a corresponding dictionary. For example, the M pieces of first information include the first information corresponding to the $i^{th}$ piece of first downlink channel sub-data, and an identifier of the first information is an index of the first information in the first dictionary. After determining the M pieces of first information, the UE may determine the identifiers of the M pieces of first information, for example, the UE may determine M identifiers in total, and the UE may send the M identifiers to the access network device. If the UE sends the identifiers of the M pieces of first information, it may be considered as that the UE sends CSI, that is, the identifiers of the M pieces of first information may be used as the CSI, or the identifiers of the M pieces of first information may be used as PMIs, or the identifiers of the M pieces of first information can implement a function similar to that of a PMI or the CSI.

Alternatively, the first indication information may not include the identifiers of the M pieces of first information, but indicate the first information in another manner. For example, there are different combination relationships between dictionary elements, and each combination relationship may include one element in each of the N dictionaries. Each combination relationship may correspond to one piece of indication information. If the UE sends a specific piece of indication information, it indicates that a combination relationship corresponding to the indication information is indicated. For example, if the first indication information corresponds to a combination relationship of the M pieces of first information, the first indication information sent by the UE may indicate the M pieces of first information.

Optionally, when sending the identifiers of the M pieces of first information, the UE may send the identifiers in a first order. The first order is an arrangement order of the M data spaces, that is, the first order specifies that the UE first sends an identifier of first information corresponding to a specific data space, and then sends an identifier of first information corresponding to a specific data space. For example, M=4, the M data spaces are a data space 1 to a data space 4, and the first order is 2-1-4-3. When sending the identifiers of the M pieces of first information, the UE first sends an identifier of first information corresponding to a data space 2, next sends an identifier of first information corresponding to the data space 1, then sends an identifier of first information corresponding to the data space 4, and finally sends an identifier of first information corresponding to the data space 3. For the UE and the access network device, the first order is known. Therefore, after receiving the identifiers of the M pieces of first information, the access network device can further determine a correspondence between a data space and an identifier of first information, to avoid a correspondence error.

For example, the first order is an order predefined in the protocol, and the UE and the access network device can determine the first order according to the protocol. Alternatively, the first order may be preconfigured in the UE and the access network device. Alternatively, the first order may be determined by the access network device. After determining the first order, the access network device may send second indication information to the UE, where the second indication information indicates the first order, and the UE can determine the first order based on the second indication information. Alternatively, the first order may be determined by the UE. After determining the first order, the UE may send third indication information to the access network device, where the third indication information indicates the first order, and the access network device can determine the first order based on the third indication information.

S504: For an $i^{th}$ piece of first information in the M pieces of first information, the access network device reconstructs an $i^{th}$ piece of second downlink channel sub-data based on the first dictionary corresponding to the $i^{th}$ data space in the M data spaces. If i is an integer from 1 to M, the access network device may obtain M pieces of second downlink channel sub-data in total.

For example, if the access network device receives the identifiers of the M pieces of first information in the first order, the access network device can determine the correspondence between a data space and an identifier of first information, so that the access network device can determine, based on a dictionary corresponding to a data space, first information corresponding to an identifier of the first information, and the first information determined by the access network device is considered as second downlink channel sub-data reconstructed by the access network device. For example, N=M, the data space one-to-one corresponds to the dictionary, and a dictionary corresponding to the $i^{th}$ data space is, for example, the first dictionary. In this case, for an identifier of the $i^{th}$ piece of first information, the access network device may determine the identifier of the $i^{th}$ piece of first information in the first dictionary, to determine first information, in the first dictionary, corresponding to the identifier of the $i^{th}$ piece of first information, that is, reconstruct second downlink channel sub-data (the $i^{th}$ piece of second downlink channel sub-data) corresponding to the $i^{th}$ piece of first information. For another example, N=1, and the M data spaces all correspond to the first dictionary. In this case, for an identifier of the $i^{th}$ piece of first information, the access network device may determine the identifier of the $i^{th}$ piece of first information in the first dictionary, to determine first information, in the first dictionary, corresponding to the identifier of the $i^{th}$ piece of first information, that is, reconstruct second downlink channel sub-data (the $i^{th}$ piece of second downlink channel sub-data) corresponding to the $i^{th}$ piece of first information. For another example, M>N>1. In this case, for an identifier of the $i^{th}$ piece of first information, the access network device can determine, in the first order, a data space corresponding to the identifier of the $i^{th}$ piece of first information, for example, the $i^{th}$ data space. The access network device may further determine, based on the correspondence between an index of a dictionary and an index of a data space, a dictionary corresponding to the $i^{th}$ data space, for example, the first dictionary. In this case, the access network device may determine first information, in the first dictionary, corresponding to the identifier of the $i^{th}$ piece of first information, that is, reconstruct second downlink channel sub-data (the $i^{th}$ piece of second downlink channel sub-data) corresponding to the $i^{th}$ piece of first information.

In an ideal state, the M pieces of second downlink channel sub-data obtained by the access network device and the M pieces of first downlink channel sub-data obtained by the UE may be the same data. For example, the $i^{th}$ piece of first downlink channel sub-data and the $i^{th}$ piece of second downlink channel sub-data are the same data. In actual application, there may be a deviation between the M pieces of second downlink channel sub-data obtained by the access network device and the M pieces of first downlink channel sub-data obtained by the UE. A process in which the UE obtains the first information based on the dictionary is equivalent to a process in which the M pieces of first downlink channel sub-data are quantized. In other words, the UE sends quantization information to the access network device, and the access network device reconstructs the M pieces of second downlink channel sub-data based on the quantization information and the dictionary. There may be some losses in a quantization and reconstruction process. Therefore, there may be a specific deviation between the M pieces of second downlink channel sub-data and the M pieces of first downlink channel sub-data. For example, the i$^{th}$ piece of first downlink channel sub-data and the i$^{th}$ piece of second downlink channel sub-data may be different data. However, with improvement of dictionary accuracy, improvement of transmission quality, and the like, the deviation between the M pieces of second downlink channel sub-data and the M pieces of first downlink channel sub-data may tend to decrease.

S505: The access network device reconstructs downlink channel information based on the M pieces of second downlink channel sub-data. In other words, the access network device reconstructs a downlink channel matrix based on the M pieces of second downlink channel sub-data, for example, reconstructs the first downlink channel matrix.

In S501, if the UE uses the complex matrix $C_{complex}$ as the first downlink channel data, or selects the F consecutive columns from the complex matrix $C_{complex}$ as the first downlink channel data, after obtaining the M pieces of second downlink channel sub-data, the access network device may concatenate the M pieces of second downlink channel sub-data, and obtained information is, for example, referred to as an angle-delay domain coefficient, where the angle-delay domain coefficient is a matrix and may be represented as $\tilde{C}_{complex}$.

Alternatively, if in S501, the UE compresses the complex matrix $C_{complex}$ to obtain the compressed information, and uses the compressed information as the first downlink channel data, the M pieces of second downlink channel sub-data obtained by the access network device are actually M pieces of compressed sub-information. Optionally, the access network device may reconstruct the M pieces of compressed sub-information, to obtain K pieces of reconstructed information, where K is a positive integer, and K may be equal to M or may not be equal to M. For example, if the UE obtains the compressed information through the encoder network, a decoder network corresponding to the encoder network may be set on an access network device side. The access network device may input the M pieces of second downlink channel sub-data into the decoder network, and the decoder network may output the K pieces of reconstructed information. The access network device may concatenate the K pieces of reconstructed information, to obtain an angle-delay domain coefficient that is a matrix and may be represented as $\tilde{C}_{complex}$.

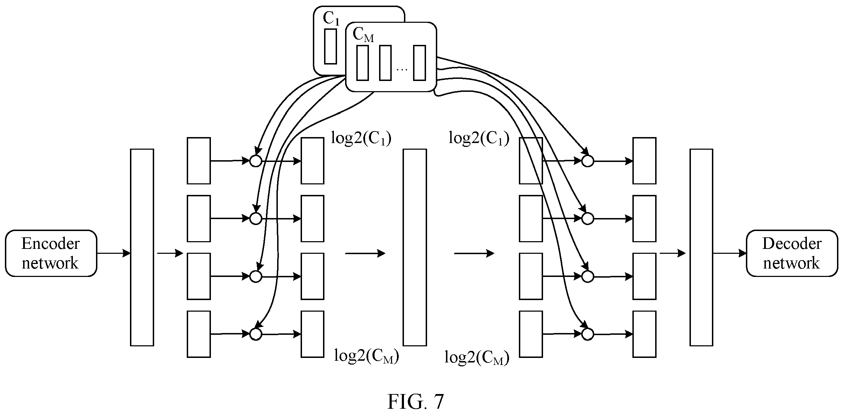

FIG. 7 is a diagram in which the UE uses the compressed information as the first downlink channel data and the access network device needs to reconstruct the compressed information. In FIG. 7, for example, the UE inputs the second downlink channel data into the encoder network, the encoder network compresses the second downlink channel data, and the encoder network outputs the compressed information, where the compressed information may be used as the first downlink channel data. Alternatively, in FIG. 7, the UE may input the complex matrix $C_{complex}$ into the encoder network, the encoder network compresses the complex matrix $C_{complex}$, and the encoder network outputs the compressed information, where the compressed information may be used as the first downlink channel data. The UE divides and allocates the compressed information into the M data spaces. In FIG. 7, M=4 is used as an example, and in this case, the UE obtains four pieces of first downlink channel sub-data. The UE processes the four pieces of first downlink channel sub-data based on four dictionaries, to obtain identifiers of four pieces of first information. In FIG. 7, a circle represents a dictionary, $C_M$ represents a quantity of elements included in an M* dictionary, and $\log_2 C_M$ represents a quantity of transmitted bits corresponding to the M* dictionary. Optionally, in FIG. 7, a quantity of transmitted bits corresponding to a dictionary may be obtained through rounding up. For example, in FIG. 7, $\log_2 C_M$ may be replaced with $\lceil \log_2 C_M \rceil$, and, $\log_2 C_1$ may be replaced with $\lceil \log_2 C_1 \rceil$. Alternatively, in FIG. 7, the quantity of transmitted bits corresponding to the dictionary may alternatively be obtained through rounding down. This is not specifically limited. One piece of first information is an element, in a corresponding dictionary, corresponding to one piece of first downlink channel sub-data. In FIG. 7, N=M is used as an example. The UE sends the identifiers of the four pieces of first information to the access network device. After receiving the identifiers of the four pieces of first information, the access network device may reconstruct four pieces of compressed sub-information based on the four dictionaries. The access network device performs processing such as concatenating on the four pieces of compressed sub-information, and then inputs obtained information into the decoder network, to obtain reconstructed information. The access network device may reconstruct the downlink channel information based on the reconstructed information. When the encoder network compresses the complex matrix $C_{complex}$, a codebook may be required. Correspondingly, when the decoder network reconstructs the compressed information, the codebook may also be required. Alternatively, the codebook may also be referred to as a dictionary, but the dictionary is different from the N dictionaries described in this disclosure.

Regardless of a manner in which the angle-delay domain coefficient is obtained, the access network device may reconstruct the downlink channel information based on the angle-delay domain coefficient $\tilde{C}_{complex}$. In an ideal state, the reconstructed downlink channel information and the first downlink channel matrix may be the same information.

For example, if the first downlink channel data is the first downlink channel matrix, $\tilde{C}_{complex} \in \mathcal{C}^{N_{tx}N_{rx}*N_{RB}}$,

and the access network device performs inverse transformation on $\tilde{C}_{complex}$, to obtain a reconstructed downlink channel (or a reconstructed downlink channel). For example, a manner in which the access network device performs inverse transformation on $\tilde{C}_{complex}$ is as follows:

$$\check{V} = S * \tilde{C}_{complex} * F^{H}, \ \tilde{C}_{complex} \in \mathcal{C}^{N_{tx}N_{rx}*N_{RB}} \qquad \text{(Formula 7)}$$

$\check{V}$ represents the reconstructed downlink channel, and a dimension of $\check{V}$ in Formula 7 is $N_{tx}N_{rx} * N_{RB}$. For example, $\check{V}$ may be directly used as the reconstructed downlink channel information, or the dimension of $\check{V}$ may be converted, in a manner such as matrix transformation, into a dimension same as the dimension of the first downlink channel matrix, and information obtained through dimension conversion is the reconstructed downlink channel information.

For another example, if the first downlink channel data is an eigenvector obtained based on the first downlink channel matrix, $\tilde{C}_{complex} \in \mathcal{C}^{N_{tx}*N_{sb}}$, and the access network device performs inverse transformation on $\tilde{C}_{complex}$, to obtain an eigen-subspace of a reconstructed downlink channel. For example, a manner in which the access network device performs inverse transformation on $\tilde{C}_{complex}$ is as follows:

$$\check{V} = S * \tilde{C}_{complex} * F^{H}, \ \tilde{C}_{complex} \in \mathcal{C}^{N_{tx}*N_{sb}} \qquad \text{(Formula 8)}$$

$\check{V}$ represents the eigen-subspace of the reconstructed downlink channel, and a dimension of $\check{V}$ in Formula 8 is $N_{tx} * N_{rb}$. For example, $\check{V}$ may be directly used as the reconstructed downlink channel information.

In this disclosure, the UE may divide and allocate the first downlink channel data into the M data spaces, and may determine, based on the dictionaries corresponding to the different data spaces, first information corresponding to each piece of first downlink channel sub-data. Different data spaces can represent different location information, that is, can represent different channel environment information. The UE feeds back first information corresponding to different data spaces, so that the access network device can determine a correspondence between first information and environment information. In this case, the first information fed back by the UE can reflect an actual communication environment, and accuracy of the first information fed back by the UE is improved. The access network device can reconstruct an accurate downlink channel based on the first information fed back by the UE.

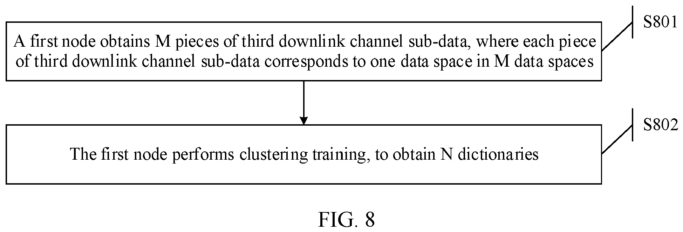

The embodiment shown in FIG. 5 describes a network inference process. A dictionary is involved in the network inference process, and the dictionary may be obtained through network training. There may be a plurality of manners for training to obtain the dictionary. For example, if the encoder network is not disposed on a UE side, and the decoder network is not disposed on an access network device side, or even if the encoder network is disposed on a UE side and the decoder network is disposed on an access network device side, the encoder network and the decoder network may be trained together with the dictionary, or may not be trained together with the dictionary. If only the dictionary needs to be obtained through training, and an encoder/decoder network does not need to be obtained, reference may be made to another communication method described below in this disclosure. A network training process is described in the method, and the dictionary may be obtained in the training process. FIG. 8 is a flowchart of the method.

S801: A first node obtains M pieces of third downlink channel sub-data. Each piece of third downlink channel sub-data corresponds to one data space in M data spaces. The M data spaces in this disclosure and the M data spaces in the embodiment shown in FIG. 5 may be the same in feature.

The M pieces of third downlink channel sub-data are, for example, obtained based on third downlink channel data. For example, UE or the first node may divide and allocate the third downlink channel data into the M data spaces, or it is understood as that UE or the first node may divide the third downlink channel data into M parts, to obtain the M pieces of third downlink channel sub-data. The third downlink channel data is, for example, original downlink channel data.

For example, the original downlink channel data in this embodiment is referred to as a third downlink channel matrix. Alternatively, the third downlink channel data may be data obtained by preprocessing fourth downlink channel data, and the fourth downlink channel data is obtained based on a third downlink channel matrix. Alternatively, the third downlink channel data may be data output by a neural network. The third downlink channel matrix may be considered as training data, or referred to as a training sample. For example, it may be considered as that the third downlink channel matrix includes one or more pieces of training data. For example, the third downlink channel matrix actually includes one or more downlink channel sub-matrices, and one downlink channel sub-matrix may be considered as one piece of training data. Third downlink channel sub-matrices herein may be independent of each other, and are not included in a large matrix. In other words, the third downlink channel matrix is not considered as a large matrix, and the third downlink channel matrix may be understood as a joint name for one or more third downlink channel sub-matrices.

If the third downlink channel data is obtained by preprocessing the fourth downlink channel data, a preprocessing process is involved. For the preprocessing process of the fourth downlink channel data, refer to descriptions of the preprocessing process of the second downlink channel data in S501 in the embodiment shown in FIG. 5.

In this disclosure, the first node is, for example, the UE, or an access network device, or may be a third-party device (for example, an AI node). A training process may be an online training process or an offline training process.

After obtaining the third downlink channel data, the first node may divide and allocate the third downlink channel data into the M data spaces, to obtain the M pieces of third downlink channel sub-data. The third downlink channel sub-data one-to-one corresponds to the data space. For example, an $i^{th}$ piece of third downlink channel sub-data in the M pieces of third downlink channel sub-data corresponds to an $i^{th}$ data space in the M data spaces, and i may be an integer from 1 to M.

To divide and allocate the third downlink channel data into the M data spaces, the first node first needs to determine the M data spaces, that is, determine a division manner of the M data spaces. For example, the first node is the UE or the access network device. For example, if the division manner of the M data spaces is predefined in a protocol, both the UE and the access network device may determine the division manner of the M data spaces according to the protocol. Alternatively, the division manner of the M data spaces is determined by the access network device. The access network device may send fourth indication information to the UE, where the fourth indication information may indicate the division manner of the M data spaces, and the UE can determine the division manner of the M data spaces based on the fourth indication information. Alternatively, the division manner of the M data spaces may be determined by the UE. The UE may send fifth indication information to the access network device, where the fifth indication information may indicate the division manner of the M data spaces, and the access network device may determine the division manner of the M data spaces based on the fifth indication information.

In this disclosure, for example, a division manner of the M data spaces is specified in the protocol as follows: M=4, and these four data spaces respectively include four parts of a piece of data. The four parts are a real part of a polarization 1 included in the data, an imaginary part of the polarization 1 included in the data, a real part of a polarization 2 included in the data, and an imaginary part of the polarization 2 included in the data. For example, if the third downlink channel data is divided and allocated into the four data spaces, four pieces of third downlink channel sub-data obtained through division respectively include a real part of a polarization 1 included in the third downlink channel data, an imaginary part of the polarization 1 included in the third downlink channel data, a real part of a polarization 2 included in the third downlink channel data, and an imaginary part of the polarization 2 included in the third downlink channel data. From a perspective of an antenna form, an antenna element is dual-polarized, and a polarization 1 and a polarization 2 represent two polarization directions. The two polarization directions may be considered independent of each other. From a perspective of a complex number, data includes a real part and an imaginary part, and a processing process of the real part and a processing process of the imaginary part are independent of each other. Therefore, a data space may be divided based on the antenna polarization directions and the real part and the imaginary part of the complex number, so that each data space can be processed independently. The data space is divided, a size of each data space is 1/M of original data, and different data spaces can represent different environment information. Optionally, a division manner of the data space may alternatively be an unequal division manner. This is not limited.

Optionally, in a network inference phase, the UE and the access network device may also determine the division manner of the M data spaces, and a determining manner is similar to that in this disclosure. Alternatively, the first node may indicate the division manner of the M data spaces to the UE and/or the access network device. In other words, in the embodiment shown in FIG. 5, to divide and allocate the first downlink channel data into the M data spaces, the UE also needs to first determine the division manner of the M data spaces. In this case, the division manner of the M data spaces provided in this disclosure may be used. In the network inference phase and a network training phase, the applied division manners of the M data spaces are consistent.

S802: The first node performs clustering (clustering) training, to obtain N dictionaries.

As described in the embodiment shown in FIG. 5, N may be equal to M, or may be equal to 1, or may be M>N>1. For these solutions, training processes of the first node may be different. The following separately describes them. 1. N=M, that is, the data space one-to-one corresponds to the dictionary.

The first node may perform clustering training based on the $i^{th}$ piece of third downlink channel sub-data in the M pieces of third downlink channel sub-data, to obtain a dictionary (for example, a first dictionary) corresponding to the $i^{th}$ data space, where the $i^{th}$ piece of third downlink channel sub-data corresponds to the $i^{th}$ data space. In other words, the first node may separately perform training in each data space, to obtain a dictionary corresponding to each data space, and M dictionaries may be obtained in total. Clustering is to divide a data set into different classes or clusters based on a specific standard (for example, a distance), so that data objects in a same cluster are similar as much as possible, and data objects that are not in a same cluster are different as much as possible. In other words, after clustering, data of the same class can be aggregated as much as possible, and data of different classes can be separated as much as possible. Each class of data has a class central value. If network model training is performed in a clustering manner in this disclosure, an element included in the dictionary may also be referred to as a class central value. Training in a data space is to obtain elements corresponding to the data space, and these elements may be used as elements included in a dictionary corresponding to the data space.

A quantity of elements included in a dictionary corresponding to one data space may be related to a bit overhead corresponding to the data space. For example, a bit overhead is 48 bits (bits), which is a total transmission overhead corresponding to the M data spaces. For example, bit overheads corresponding to all data spaces are equal. It is assumed that there are four data spaces in total, and a transmission overhead corresponding to each data space is 1/M of a total bit overhead. In this case, a bit overhead corresponding to one data space is 12 bits. The 12 bits may carry a maximum of $2^{12}$ identifiers. Therefore, a quantity of elements included in the first dictionary needs to be less than or equal to $2^{12}$. It can be learned that different bit overheads correspond to different quantities of elements. Optionally, the first node may separately train different dictionaries based on different bit overheads, and the bit overhead may one-to-one correspond to the dictionary. In other words, the first node may train one or more dictionaries for one data space. If a plurality of dictionaries are trained, the plurality of dictionaries may correspond to different bit overheads, so that the UE may select a proper dictionary based on a current bit overhead when performing network inference.

For example, in a network inference process, a bit overhead corresponding to a data space is generally determined on a network side, for example, determined by the access network device.

The access network device may determine the bit overhead based on a real-time channel state between the access network device and the UE. When the UE performs the network inference process in the embodiment shown in FIG. 5, the access network device may first deliver information to the UE, to determine a bit overhead of a current transmission. The information may indicate the total bit overhead corresponding to the M data spaces, or may determine a bit overhead corresponding to one data space. The UE may select a proper dictionary based on a bit overhead indicated by the access network device. For example, if the access network device indicates that the total bit overhead is 48 bits, and M=4, the UE may determine that the transmission overhead of each data space is 48/4=12 bits. For example, when the UE determines the dictionary corresponding to the $i^{th}$ data space, if the $i^{th}$ data space corresponds to a plurality of dictionaries (different dictionaries correspond to different bit overheads), the UE may select a dictionary corresponding to the 12 bits from the dictionaries to perform network inference.

In addition, the first node may further determine, based on a dimension of the $i^{th}$ piece of third downlink channel sub-data, a dimension of the element included in the first dictionary. The dimension of the element included in the first dictionary may also be considered as a depth of the first dictionary, and is related to a dimension of downlink channel sub-data used for training the first dictionary. Therefore, the first node may determine, based on the dimension of the $i^{th}$ piece of third downlink channel sub-data, the dimension of the element included in the first dictionary. For example, the first node may convert the $i^{th}$ piece of third downlink channel sub-data into a vector, and a length of the vector is the dimension of the element included in the first dictionary. For example, the $i^{th}$ piece of third downlink channel sub-data is the real part of the polarization 1 included in the third downlink channel data, and this part is, for example, a matrix whose dimension is [16,13]. The first node may convert the matrix into a vector whose length is $16 \times 13$. In this case, the dimension of the element included in the first dictionary is $16 \times 13$.

The first node may convert a matrix into a vector by row, or may convert a matrix into a vector by column. In the network inference process, the UE also needs to perform this conversion process. To enable the access network device to reconstruct accurate downlink channel information, a conversion sequence of the UE needs to be known by both the UE and the access network device. For example, the conversion sequence of the UE may be predefined in the protocol, or the conversion sequence of the UE may be determined by the access network device and notified to the UE, or the conversion sequence of the UE may be determined by the UE and notified to the access network device. The conversion sequence in the network inference process may be consistent with a conversion sequence in a network training process.

After determining a quantity of elements included in the first dictionary and the dimension of the element included in the first dictionary, the first node may perform clustering training based on the $i^{th}$ piece of third downlink channel sub-data, to obtain the first dictionary. For each data space, the first node may perform training in a similar manner, to obtain the M dictionaries. 2. N=1, that is, the M data spaces correspond to one dictionary. For example, the dictionary is referred to as a first dictionary.

The first node may perform clustering training based on the M pieces of third downlink channel sub-data, to obtain the dictionary (for example, the first dictionary) corresponding to the M data spaces. In other words, after obtaining the M pieces of third downlink channel sub-data, the first node may perform unified training, to obtain a dictionary, and the dictionary corresponds to all the M data spaces. The M pieces of third downlink channel sub-data are used to train a dictionary. For the dictionary, it is equivalent to that sampled data (or the training data) is increased by M-1 times, and the training data is richer, so that elements included in the dictionary are more abundant and detailed, and this helps the access network device reconstruct more accurate downlink channel information.

The M pieces of third downlink channel sub-data are used to perform training, to obtain elements corresponding to the M data spaces, and these elements may be used as elements included in a dictionary obtained through training.

Optionally, the first node may separately train different dictionaries based on different bit overheads, and the bit overhead may one-to-one correspond to the dictionary. In other words, the first node may train one or more dictionaries. If a plurality of dictionaries are trained, the plurality of dictionaries may correspond to different bit overheads, so that the UE may select a proper dictionary based on a current bit overhead when performing network inference.

In addition, the first node may further determine, based on a dimension of the third downlink channel data, a dimension of an element included in the first dictionary. For a determining manner, refer to the foregoing descriptions. The first dictionary is, for example, a dictionary obtained by the first node through training.

After determining a quantity of elements included in the first dictionary and the dimension of the element included in the first dictionary, the first node may perform clustering training based on the M pieces of third downlink channel sub-data, to obtain the first dictionary.

Alternatively, when N=1, the first node may separately perform training in all data spaces. For example, the first node uses a training manner used when N=M, but a condition needs to be added during training, that is, dictionaries obtained through training in all the data spaces are the same. In this case, although the first node may obtain the N dictionaries through training, the N dictionaries are the same. This is equivalent to that the first node still obtains one dictionary. 3. M>N>1, that is, the M data spaces correspond to the N dictionaries.

The first node may perform clustering training based on at least one piece of third downlink channel sub-data in the M pieces of third downlink channel sub-data, to obtain one dictionary (for example, a first dictionary) in the N dictionaries. For example, if the third downlink channel sub-data one-to-one corresponds to the data space, the at least one piece of third downlink channel sub-data corresponds to at least one data space. One dictionary may correspond to one or more data spaces. For example, there is a correspondence between an index of a dictionary and an index of a data space. In this case, when training a dictionary, the first node performs training based on third downlink channel sub-data in a data space corresponding to the dictionary.

Optionally, the first node may separately train different dictionaries based on different bit overheads, and the bit overhead may one-to-one correspond to the dictionary. In other words, one dictionary corresponds to one or more data spaces. For the one or more data spaces, the first node may train one or more dictionaries based on the different bit overheads. If a plurality of dictionaries are trained, the plurality of dictionaries may correspond to different bit overheads, so that the UE may select a proper dictionary based on a current bit overhead during network inference.

In addition, the first node may further determine, based on a dimension of the third downlink channel data, a dimension of an element included in the first dictionary. For a determining manner, refer to the foregoing descriptions. The first dictionary is, for example, a dictionary obtained by the first node through training.

After determining a quantity of elements included in the first dictionary and the dimension of the element included in the first dictionary, the first node may perform clustering training based on the at least one piece of third downlink channel sub-data, to obtain the first dictionary.

There may be a plurality of clustering training manners that may be applied in this disclosure, for example, a K-Means clustering method. In addition, in a training process of the neural network, a loss function may be defined, and the loss function describes a gap or a difference between an ideal target value and an output value of the neural network. In a clustering training process, the loss function may not be used, or the loss function may be used. For example, a loss function uses a minimum value of distances between a clustering center and each of a plurality of training samples as a target, or uses a training sample that is most related to the clustering center and that is in the plurality of training samples as a target. In addition, the loss function may be another function, and an implementation of the loss function is not limited in this disclosure. A training process of a dictionary is a process in which a parameter of the dictionary is adjusted, so that a value of the loss function is less than a threshold, or a value of the loss function satisfies a target requirement. That the parameter of the dictionary is adjusted includes, for example, an element of the dictionary is adjusted.

Content included in the dictionary is described in the embodiment shown in FIG. 5, and details are not described again.

In the foregoing process, the first node obtains the N dictionaries through training, so that the UE can use the N dictionaries in the network inference process in the embodiment shown in FIG. 5, and the access network device can also use the N dictionaries during reconstructing the downlink channel information. The data space and the N dictionaries are divided, so that environment information corresponding to a downlink channel can be reflected, and this helps the access network device reconstruct more accurate downlink channel information.

For ease of understanding, the following uses some accompanying drawings as examples to describe a network training process and a network inference process in this disclosure.

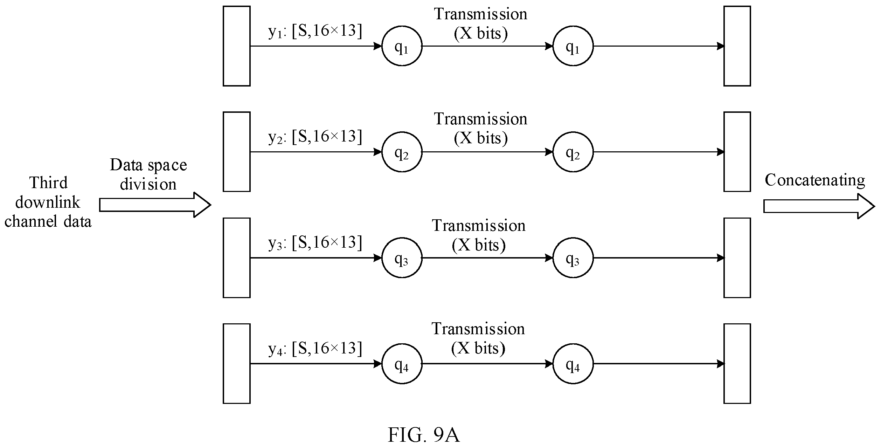

FIG. 9A is a diagram of a training process and a network inference process according to this disclosure. In training processes in FIG. 9A and subsequent accompanying drawings, an example in which UE performs the training process is used. A process from third downlink channel data to $q_1$ to $q_4$, that is, before information is sent to an access network device, may be considered as a training process. An entire process in FIG. 9A may also be considered as the network inference process, and the network inference process may also be considered as a processing process of a piece of data. Certainly, the data is actually not training data used for training, but the processing process of the data is similar to that of the training data. The training process includes obtaining a dictionary by performing clustering training on a plurality of pieces of training data. A processing process may be considered as representing downlink channel data by using the obtained dictionary. In the training process, it is assumed that the training data is original downlink channel data, and the original downlink channel data actually includes a plurality of pieces of training data (or referred to as training samples). The UE processes each piece of training data in the original downlink channel data, to obtain an eigenvector, where a dimension of the eigenvector is [$N_{tx}$=32,$N_{sb}$=13]. The UE preprocesses the eigenvector, to obtain a sparse coefficient of the eigenvector, and sparse coefficients of eigenvectors corresponding to the plurality of pieces of training data may be used as the third downlink channel data. Because real-number training is used for network training, a data input is divided into two parts: a real part and an imaginary part, and a dimension of the third downlink channel data is, for example, [E,2,32,13]. "E" in the dimension of the third downlink channel data is considered as an amount of training data. In other words, in this case, the third downlink channel data may be considered as including E pieces of training data, and E is a positive integer. In the dimension of the third downlink channel data, "2" represents a real part and an imaginary part, "32" represents $N_{tx}$, and "13" represents $N_{sb}$.

The third downlink channel data is divided and allocated into M data spaces, that is, the third downlink channel data is divided into M parts. In FIG. 9A, M=4 is used as an example, and in this case, four pieces of third downlink channel sub-data may be obtained through division. The four pieces of third downlink channel sub-data are $y_1$, $y_2$, $y_3$, and $y_4$. Dimensions of $y_1$, $y_2$, $y_3$, and $y_4$ each are [S,16×13], where S represents an amount of training data corresponding to one piece of third downlink channel sub-data, and 16×13 is, for example, a dimension of a to-be-trained dictionary. $q_1$ to $q_4$ in FIG. 9A represent four to-be-trained dictionaries, that is, in FIG. 9A, N=M is used as an example. The UE trains the four dictionaries in a clustering manner. Optionally, in an offline training manner, information about the four dictionaries may be agreed on in a protocol, or may be sent by the UE to the access network device. In an online training manner, information about the four dictionaries may be sent by the UE to the access network device.

In the inference process, for example, the UE may obtain four pieces of first information based on four pieces of first downlink channel sub-data and four dictionaries obtained through training, where one piece of first information is an element, in a corresponding dictionary, corresponding to one piece of first downlink channel sub-data.

For example, the UE sends identifiers of the four pieces of first information to the access network device, where an identifier of each piece of first information may occupy X bits. After receiving the identifiers of the four pieces of first information, the access network device may reconstruct the four pieces of first information based on the four dictionaries. Then, the access network device performs processing such as concatenating on the four pieces of first information, to reconstruct downlink channel information, that is, reconstruct a downlink channel matrix.

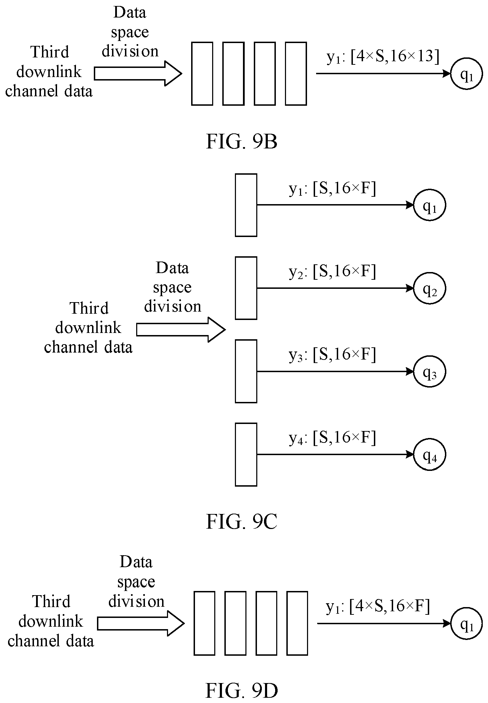

FIG. 9B is another diagram of a training process according to this disclosure. It is assumed that UE processes each piece of training data in original downlink channel data, to obtain an eigenvector, where a dimension of the eigenvector is [$N_{tx}$=32,$N_{sb}$=13]. The UE preprocesses the eigenvector, to obtain a sparse coefficient of the eigenvector, and sparse coefficients of eigenvectors corresponding to a plurality of pieces of training data included in the original downlink channel data may be used as third downlink channel data. Because real-number training is used for network training, a data input is divided into two parts: a real part and an imaginary part, and a dimension of the third downlink channel data is, for example, [E,2,32,13]. Herein, E is an amount of training data, and E is a positive integer.

The third downlink channel data is divided and allocated into M data spaces, that is, the third downlink channel data is divided into M parts. In FIG. 9B, M=4 is used as an example, and in this case, four pieces of third downlink channel sub-data obtained through division may be uniformly represented as $y_1$, that is, $y_1$ may be considered as including the four pieces of third downlink channel sub-data. A dimension of $y_1$ is [4×S, 16×13], where S represents an amount of training data corresponding to one piece of third downlink channel sub-data, and an amount of training data corresponding to the four pieces of third downlink channel sub-data is 4×S. In addition, 16×13 is, for example, a dimension of a to-be-trained dictionary. In FIG. 9B, $q_1$ represents a to-be-trained dictionary to which the M data spaces uniformly correspond, that is, in FIG. 9B, N=1 is used as an example. The UE trains the dictionary in a clustering manner.

In the network inference process, for each data space, the UE may independently find corresponding first information in a corresponding dictionary. If, as shown in FIG. 9B, the M data spaces uniformly correspond to one dictionary, in the network inference process, for each data space, the UE may find corresponding first information in a dictionary obtained through training in FIG. 9B. FIG. 9B is still used as an example. In this case, the UE may determine four pieces of first information. For example, the UE sends identifiers of the four pieces of first information to an access network device. After receiving the identifiers of the four pieces of first information, the access network device may reconstruct the four pieces of first information based on four dictionaries. Then, the access network device performs processing such as concatenating on the four pieces of first information, to reconstruct downlink channel information, that is, reconstruct a downlink channel matrix.

In FIG. 9A and FIG. 9B, an example in which the third downlink channel data is a preprocessing result of the original downlink channel data (or the eigenvectors) is used. It can be learned from descriptions of the embodiment shown in FIG. 5 that the third downlink channel data may alternatively be F consecutive columns of data extracted from the preprocessing result. In this case, a dimension of an element included in the dictionary may change. For example, if an $i^{th}$ piece of third downlink channel sub-data is one of M pieces of data obtained by dividing the F columns of data extracted from the preprocessing result, the $i^{th}$ piece of third downlink channel sub-data is, for example, a matrix whose dimension is [16,F], and the UE may convert the matrix into a vector whose length is $16 \times F$. In this case, a dimension of an element included in a first dictionary is $16 \times F$. F is generally less than a quantity of subbands. In this case, a storage space occupied by the dictionary can be reduced.

FIG. 9C is still another diagram of a training process according to this disclosure. It is assumed that UE processes each piece of training data in original downlink channel data, to obtain an eigenvector, where a dimension of the eigenvector is [$N_{tx}$=32,$N_{sb}$=13]. The UE preprocesses the eigenvector, to obtain a sparse coefficient of the eigenvector, and sparse coefficients of eigenvectors corresponding to a plurality of pieces of training data included in the original downlink channel data may be used as third downlink channel data. Because real-number training is used for network training, a data input is divided into two parts: a real part and an imaginary part, and a dimension of the third downlink channel data is, for example, [E,2,32,13]. Herein, E is an amount of training data, and E is a positive integer. F consecutive columns of data are extracted from the third downlink channel data, and the F consecutive columns of data are divided and allocated into M data spaces, to obtain M pieces of third downlink channel sub-data. In FIG. 9C, M=4 is used as an example, and four pieces of third downlink channel sub-data obtained through division are $y_1$, $y_2$, $y_3$, and $y_4$. Dimensions of $y_1$, $y_2$, $y_3$, and $y_4$ each are [S,$16 \times F$]. $q_1$ to $q_4$ in FIG. 9C represent four dictionaries, that is, in FIG. 9C, N=M is used as an example. The UE trains the four dictionaries in a clustering manner.

In the network inference process, for each data space, the UE may independently find corresponding first information in a corresponding dictionary. FIG. 9C is still used as an example. In this case, the UE may determine four pieces of first information based on four dictionaries obtained through training in FIG. 9C. For example, the UE sends identifiers of the four pieces of first information to an access network device. After receiving the identifiers of the four pieces of first information, the access network device may reconstruct the four pieces of first information based on the four dictionaries. Then, the access network device performs processing such as concatenating on the four pieces of first information, to reconstruct downlink channel information, that is, reconstruct a downlink channel matrix.

FIG. 9D is yet another diagram of a training process according to this disclosure. It is assumed that UE processes each piece of training data in original downlink channel data, to obtain an eigenvector, where a dimension of the eigenvector is [$N_{tx}$=32,$N_{sb}$=13]. The UE preprocesses the eigenvector, to obtain a sparse coefficient of the eigenvector, and sparse coefficients of eigenvectors corresponding to a plurality of pieces of training data included in the original downlink channel data may be used as third downlink channel data. Because real-number training is used for network training, a data input is divided into two parts: a real part and an imaginary part, and a dimension of the third downlink channel data is, for example, [E,2,32,13].

F consecutive columns of data are extracted from the third downlink channel data, and the F consecutive columns of data are divided and allocated into M data spaces, to obtain M pieces of third downlink channel sub-data. In FIG. 9D, M=4 is used as an example. These four pieces of third downlink channel sub-data may be uniformly represented as $y_1$, where a dimension of $y_1$ is [$4 \times S$,$16 \times 13$]. In FIG. 9B, $q_1$ represents a dictionary to which the M data spaces uniformly correspond, that is, in FIG. 9C, N=1 is used as an example. The UE trains the dictionary in a clustering manner.

In the network inference process, for each data space, the UE may independently find corresponding first information in a corresponding dictionary. If, as shown in FIG. 9D, the M data spaces uniformly correspond to one dictionary, in the network inference process, for each data space, the UE may find corresponding first information in a dictionary obtained through training in FIG. 9D. FIG. 9D is still used as an example. In this case, the UE may determine four pieces of first information. For example, the UE sends identifiers of the four pieces of first information to an access network device. After receiving the identifiers of the four pieces of first information, the access network device may reconstruct the four pieces of first information based on four dictionaries. Then, the access network device performs processing such as concatenating on the four pieces of first information, to reconstruct downlink channel information, that is, reconstruct a downlink channel matrix.

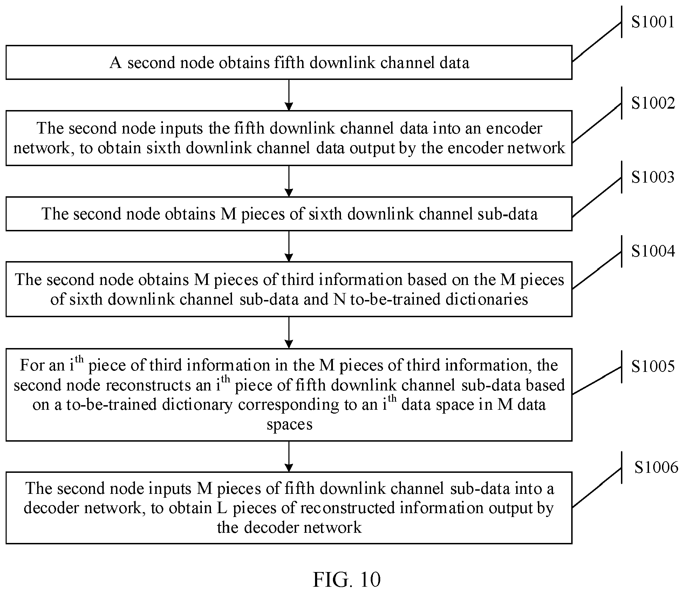

The network training process described in the embodiment shown in FIG. 8 is a process of obtaining the dictionary through training. The foregoing also describes information that an encoder network may be set on a UE side, and a decoder network corresponding to the encoder network may be set on an access network device side. In this case, another network training process is a process of jointly training the encoder network, the decoder network, and the dictionary. The following describes still another communication method in this disclosure. A joint training process is described in the method. FIG. 10 is a flowchart of the method.

S1001: A second node obtains fifth downlink channel data.

The fifth downlink channel data is, for example, original downlink channel data. Alternatively, the fifth downlink channel data may be data obtained by preprocessing the original downlink channel data. Alternatively, the fifth downlink channel data may be data output by a neural network. The original downlink channel data may be considered as training data, or referred to as a training sample. In a process of training a dictionary, the second node needs to train the training sample. The original downlink channel data may include one or more pieces of training data.

If the fifth downlink channel data is obtained by preprocessing the original downlink channel data, a preprocessing process is involved. For the preprocessing process of the original downlink channel data, refer to descriptions of the preprocessing process of the second downlink channel data in S501 in the embodiment shown in FIG. 5.

In this disclosure, the second node is, for example, UE, or an access network device, or may be a third-party device (for example, an AI node). A training process may be an online training process or an offline training process. The second node and the first node in the embodiment shown in FIG. 8 may be the same node, or may be different nodes.

The second node may perform joint training on an encoder network, the dictionary, and a decoder network by using the fifth downlink channel data. The following describes the training process by performing S 1002 to S 1006.

S 1002: The second node inputs the fifth downlink channel data into the encoder network, to obtain sixth downlink channel data output by the encoder network.

The encoder network is an encoder network that needs to be trained. The second node inputs the fifth downlink channel data into the encoder network, and the encoder network may perform processing such as compression on the fifth downlink channel data. After processing, the encoder network outputs the sixth downlink channel data.

S 1003: The second node obtains M pieces of sixth downlink channel sub-data. Each piece of sixth downlink channel sub-data corresponds to one data space in M data spaces. The M data spaces in this disclosure and the M data spaces in the embodiment shown in FIG. 5 may be the same in feature.

The M pieces of sixth downlink channel sub-data are obtained based on the sixth downlink channel data. For example, the M pieces of sixth downlink channel sub-data may be obtained by dividing and allocating the sixth downlink channel data into the M data spaces. For more content of S1001, refer to S801 in the embodiment shown in FIG. 8.

S 1004: The second node obtains M pieces of third information based on the M pieces of sixth downlink channel sub-data and N to-be-trained dictionaries.

For example, in the process of training the dictionary, the second node trains the to-be-trained dictionary based on an $i^{th}$ data space in the M data spaces, where i is an integer from 1 to M, and the second node may train M to-be-trained dictionaries. The second node trains, based on the $i^{th}$ data space in the M data spaces, the to-be-trained dictionary corresponding to the data space. For example, in a training manner, for an $i^{th}$ piece of sixth downlink channel sub-data in the M pieces of sixth downlink channel sub-data, if the second node obtains, based on the to-be-trained dictionary corresponding to the $i^{th}$ data space, third information corresponding to the $i^{th}$ piece of sixth downlink channel sub-data, the second node may obtain the M pieces of third information in total. For example, the third information corresponding to the $i^{th}$ piece of sixth downlink channel sub-data is an element, in the to-be-trained dictionary corresponding to the $i^{th}$ data space, corresponding to the $i^{th}$ piece of sixth downlink channel sub-data.

Before training begins, an initial model may be set as the to-be-trained dictionary, and a plurality of rounds of training (herein, a process of training by using one piece of training data may be considered as a round of training process) are performed on the initial model by using original downlink channel data. After the training is completed, a dictionary used in a network inference phase may be obtained. Therefore, the to-be-trained dictionary corresponding to the $i^{th}$ data space may be the initial model, or may be an intermediate model obtained by performing at least one round of training on the initial model.

Optionally, in the process of training the dictionary, the second node may further train the to-be-trained dictionaries based on the M data spaces, and the second node may obtain M same dictionaries or one dictionary through training. The second node trains, based on the M data spaces, the to-be-trained dictionaries. For example, in a training manner, for an $i^{th}$ piece of sixth downlink channel sub-data in the M pieces of sixth downlink channel sub-data, if the second node obtains, based on the to-be-trained dictionaries, third information corresponding to the $i^{th}$ piece of sixth downlink channel sub-data, the second node may obtain the M pieces of third information in total. For example, the third information corresponding to the $i^{th}$ piece of sixth downlink channel sub-data is an element, in the to-be-trained dictionary, corresponding to the $i^{th}$ piece of sixth downlink channel sub-data.

S1005: For an $i^{th}$ piece of third information in the M pieces of third information, the second node reconstructs an $i^{th}$ piece of fifth downlink channel sub-data based on the to-be-trained dictionary corresponding to the $i^{th}$ data space in the M data spaces. If i is an integer from 1 to M, the second node may obtain M pieces of fifth downlink channel sub-data in total.

In an ideal state, the M pieces of fifth downlink channel sub-data obtained by the second node and the M pieces of sixth downlink channel sub-data obtained by the second node may be the same data. For example, the $i^{th}$ piece of sixth downlink channel sub-data and the $i^{th}$ piece of fifth downlink channel sub-data are the same data. In actual application, there may be a deviation between the M pieces of sixth downlink channel sub-data and the M pieces of fifth downlink channel sub-data. For the content, refer to S504 in the embodiment shown in FIG. 5.

For more content of S1005, refer to S504 in the embodiment shown in FIG. 5.

S1006: The second node inputs the M pieces of fifth downlink channel sub-data into the decoder network, to obtain L pieces of reconstructed information output by the decoder network, where L is a positive integer. Alternatively, the second node concatenates the M pieces of fifth downlink channel sub-data, and inputs concatenated downlink channel sub-data into the decoder network, to obtain first reconstructed information output by the decoder network.

The decoder network is a decoder network that needs to be trained, and is also a decoder network corresponding to the encoder network in S1002.

For example, the original downlink channel data includes a plurality of pieces of training data, and one of the plurality of pieces of training data may include training sub-data and a label. The second node may input the training sub-data into the encoder network to obtain encoded data, and after the encoded data is processed through the decoder network, the decoder network may output an inference result (for example, the L pieces of reconstructed information or the first reconstructed information described in this disclosure). The second node may calculate an error between the inference result and the label according to a loss function. Based on the error, the second node may optimize parameters/a parameter of the encoder network and/or the decoder network according to a backpropagation optimization algorithm (or referred to as a model optimization algorithm or the like). The encoder network and the decoder network are trained by using a large amount of training data, so that neural network training is completed after a difference between an output of the decoder network and the label is less than a preset value.

It should be noted that, in the foregoing training processes of the encoder network and the decoder network, a supervised learning training manner is used, that is, the loss function is used to implement training of the encoder network and the decoder network based on the training data and the label. Alternatively, in a training process of an intelligent model, unsupervised learning may be used, and an algorithm is used to learn an internal pattern of the training data, to complete training of the intelligent model based on the training data. In a training process of an intelligent model, reinforcement learning may alternatively be used, and an excitation signal fed back by an environment is obtained through interaction with the environment, to learn a problem-resolving policy and optimize the model. A model training method, a model type, and the like are not limited in this disclosure.

It can be learned from the foregoing descriptions that, when training the encoder network and the decoder network, the second node may perform training according to a loss function. Optionally, a same loss function may be set for the M data spaces. In other words, for any data space in the M data spaces, the second node may perform joint training according to the loss function. For example, if the decoder network outputs the L pieces of reconstructed information, a mean square error (mean square error, MSE) between the fifth downlink channel data and data obtained by concatenating the L pieces of reconstructed information reconstructed through the decoder network may be used as the loss function, or a correlation between the third downlink channel data and data obtained by concatenating the L pieces of reconstructed information reconstructed through the decoder network may be used as the loss function. Alternatively, if the decoder network outputs the first reconstructed information, an MSE between the first reconstructed information and the fifth downlink channel data may be used as the loss function, or a correlation between the first reconstructed information and the third downlink channel data may be used as the loss function, or the like.

Alternatively, different loss functions may be respectively set for different data spaces. For example, if the decoder network outputs the L pieces of reconstructed information, the MSE between the reconstructed information reconstructed through the decoder network and data input to the encoder network may be used as a loss function corresponding to a data space. The reconstructed information that corresponds to the loss function and that is reconstructed through the decoder network is reconstructed information that corresponds to the data space and that is reconstructed through the decoder network. The data that is input to the encoder network and that corresponds to the loss function is data that is in the fifth downlink channel data input to the encoder network and that corresponds to the data space.

In the foregoing process, the second node performs joint training on the encoder network, the decoder network, and the dictionary, to obtain N dictionaries, and obtain the encoder network and the corresponding decoder network. In this case, the UE can use the N dictionaries and the encoder network in the network inference process in the embodiment shown in FIG. 5, and the access network device can also use the N dictionaries and the decoder network during reconstructing downlink channel information. The data space and the N dictionaries are divided, so that environment information corresponding to a downlink channel can be reflected, and this helps the access network device reconstruct more accurate downlink channel information. If the encoder network and the decoder network are not used in the embodiment shown in FIG. 5, a network training manner provided in the embodiment shown in FIG. 8 may be used to individually train the dictionary. If the encoder network and the decoder network need to be used in the embodiment shown in FIG. 5, a network training manner provided in the embodiment shown in FIG. 10 may be used to obtain the encoder network, the decoder network, and the dictionary through jointly training.

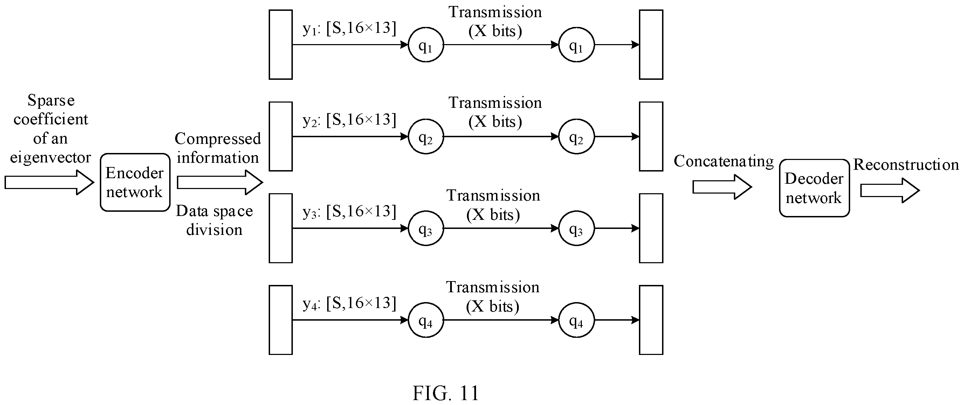

For example, FIG. 11 is a diagram of a training process and a network inference process according to this disclosure. In the training process, for example, an encoder network, a decoder network, and a dictionary are obtained through joint training, and the encoder network, the decoder network, and the dictionary may be used in the network inference process. A process from third downlink channel data to $q_1$ to $q_4$, that is, before information is sent to an access network device, may be considered as a training process. An entire process in FIG. 11 may also be considered as the network inference process, and the network inference process may also be considered as a processing process of a piece of training data. Certainly, the data is actually not training data used for training, but the processing process of the data is consistent with that of the training data.

In the training process, it is assumed that original downlink channel data may include a plurality of pieces of training data. UE processes each piece of training data in the original downlink channel data, to obtain an eigenvector, where a dimension of the eigenvector is $[N_{tx}=32, N_{sb}=13]$. The UE preprocesses the eigenvector, to obtain a sparse coefficient of the eigenvector. The UE compresses the sparse coefficient of the eigenvector by using the encoder network, to obtain compressed information. Compressed information corresponding to the plurality of pieces of training data may be used as the third downlink channel data.

The UE divides and allocates the third downlink channel data into four data spaces, to obtain four pieces of third downlink channel sub-data, where the four pieces of third downlink channel sub-data are $y_1$, $y_2$, $y_3$, and $y_4$. Dimensions of $y_1$, $y_2$, $y_3$, and $y_4$ each are $[S, 16 \times 13]$, where S represents an amount of training data corresponding to one piece of third downlink channel sub-data, and $16 \times 13$ is, for example, a dimension of a to-be-trained dictionary. $q_1$ to $q_4$ in FIG. 11 represent four to-be-trained dictionaries, that is, in FIG. 11, N=M is used as an example. The UE trains the four dictionaries in a clustering manner.

In the inference process, for example, the UE may obtain four pieces of first information based on the four to-be-trained dictionaries and four pieces of first downlink channel sub-data. One piece of first information is an element, in a corresponding dictionary, corresponding to one piece of first downlink channel sub-data.

For example, the UE sends identifiers of the four pieces of first information to the access network device, where an identifier of each piece of first information may occupy X bits. After receiving the identifiers of the four pieces of first information, the access network device may reconstruct four pieces of compressed sub-information based on the four dictionaries. The access network device performs processing such as concatenating on the four pieces of compressed sub-information, and then inputs a processing result into the decoder network, to obtain reconstructed information output by the decoder network. After obtaining the reconstructed information output by the decoder network, the access network device may reconstruct downlink channel information based on the reconstructed information. The loss function in the embodiment shown in FIG. 10 may be applied in a training process, so that performance of the encoder/decoder network obtained through training is better.

A communication apparatus provided in this disclosure is described based on the foregoing method embodiments.

It may be understood that, to implement functions in the foregoing methods, the access network device, the UE, and the like include corresponding hardware structures and/or software modules for performing the functions. A person skilled in the art should be easily aware that, with reference to units and method steps in the examples described in this disclosure, this disclosure can be implemented by hardware or a combination of hardware and computer software. Whether a function is performed by hardware or hardware driven by computer software depends on particular application scenarios and design constraints of the technical solutions.

This disclosure provides a communication apparatus. The communication apparatus includes, for example, a processing unit and a transceiver unit (or referred to as a communication unit). The processing unit may be configured to implement a processing function of the UE in the embodiment shown in FIG. 5, the embodiment shown in FIG. 8, or the embodiment shown in FIG. 10, and the transceiver unit may be configured to implement all or a part of a transceiver function of the UE in the embodiment shown in FIG. 5, the embodiment shown in FIG. 8, or the embodiment shown in FIG. 10. Alternatively, the processing unit may be configured to implement a processing function implemented by the access network device in the embodiment shown in FIG. 5, the embodiment shown in FIG. 8, or the embodiment shown in FIG. 10, and the transceiver unit may be configured to implement all or a part of a transceiver function of the access network device in the embodiment shown in FIG. 5, the embodiment shown in FIG. 8, or the embodiment shown in FIG. 10.

Optionally, the processing unit and/or the transceiver unit may be implemented by using a virtual module. For example, the processing unit may be implemented by using a software functional unit or a virtual apparatus, and the transceiver unit may be implemented by using a software functional unit or a virtual apparatus. Alternatively, the processing unit and/or the transceiver unit may be implemented by using a physical apparatus (for example, a circuit system and/or a processor). The following describes a case in which the processing unit and the transceiver unit are implemented by using a physical apparatus.

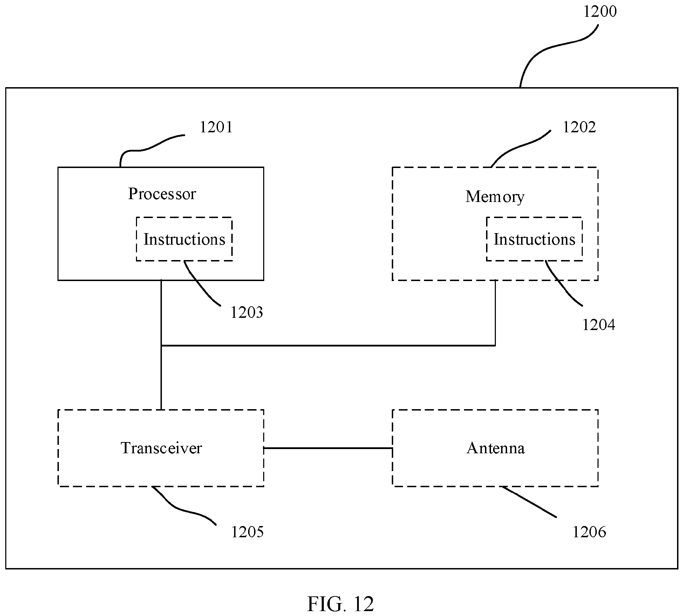

FIG. 12 is a diagram of a structure of a communication apparatus according to this disclosure. The communication apparatus 1200 may be the UE in the embodiment shown in FIG. 5, the embodiment shown in FIG. 8, or the embodiment shown in FIG. 10, a circuit system of the UE, a circuit system that can be used in the UE, or the like, and is configured to implement the method corresponding to the UE in the foregoing method embodiments. Alternatively, the communication apparatus 1200 may be the access network device in the embodiment shown in FIG. 5, the embodiment shown in FIG. 8, or the embodiment shown in FIG. 10, a circuit system of the access network device, a circuit system that can be used in the access network device, or the like, and is configured to implement the method corresponding to the access network device in the foregoing method embodiments. For a specific function, refer to the descriptions in the foregoing method embodiments. For example, a circuit system is a chip system.

The communication apparatus 1200 includes one or more processors 1201. The processor 1201 may implement a specific control function. The processor 1201 may be a general-purpose processor, a dedicated processor, or the like. For example, the processor 1201 includes a baseband processor, a central processing unit, and the like. The baseband processor may be configured to process a communication protocol and communication data. The central processing unit may be configured to control the communication apparatus 1200, execute a software program, and/or process data. Different processors may be independent components, or may be disposed in one or more processing circuits, for example, integrated in one or more application-specific integrated circuits.

Optionally, the communication apparatus 1200 includes one or more memories 1202, to store instructions 1204. The instructions 1204 may be run on the processor, so that the communication apparatus 1200 performs the method described in the foregoing method embodiments. Optionally, the memory 1202 may further store data. The processor and the memory may be separately disposed, or may be integrated together. The memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this disclosure may alternatively be a circuit or any other apparatus that can implement a storage function, and is configured to store program instructions and/or data. Optionally, the communication apparatus 1200 may store instructions 1203 (which may also be referred to as code or programs sometimes). The instructions 1203 may be run on the processor, so that the communication apparatus 1200 performs the methods described in the foregoing embodiments. The processor 1201 may store data.

For example, a processing unit is implemented by using the one or more processors 1201, or a processing unit is implemented by using the one or more processors 1201 and the one or more memories 1202, or a processing unit is implemented by using the one or more processors 1201, the one or more memories 1202, and the instructions 1203.

Optionally, the communication apparatus 1200 may further include a transceiver 1205 and an antenna 1206. The transceiver 1205 may be referred to as a transceiver unit, a transceiver, a transceiver circuit, a transceiver machine, an input/output interface, or the like, and is configured to implement a transceiver function of the communication apparatus 1200 through the antenna 1206. For example, the transceiver unit is implemented by using the transceiver 1205, or the transceiver unit is implemented by using the transceiver 1205 and the antenna 1206.

Optionally, the communication apparatus 1200 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 1200 may include more or fewer components, or an integration of a part of the components, or splits from a part of the components. These components may be implemented by hardware, software, or a combination of software and hardware.

The processor 1201 and the transceiver 1205 described in this disclosure may be implemented on an integrated circuit (integrated circuit, IC), an analog IC, a radio frequency integrated circuit (radio frequency identification, RFID), a mixed signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to descriptions of the UE and the access network device in the foregoing embodiments. Details are not described herein again.

This disclosure provides a terminal device, and the terminal device may be used in the foregoing embodiments. The terminal device includes corresponding means (means), units, and/or circuits for implementing functions of the UE in the embodiment shown in FIG. 5, the embodiment shown in FIG. 8, or the embodiment shown in FIG. 10. For example, the terminal device includes a transceiver module (or referred to as a transceiver unit), configured to support the terminal device in implementing a transceiver function, and a processing module (or referred to as a processing unit), configured to support the terminal device in processing a signal.

This disclosure further provides an access network device, and the access network device may be used in the foregoing embodiments. The access network device includes corresponding means (means), units, and/or circuits for implementing functions of the access network device in the embodiment shown in FIG. 5, the embodiment shown in FIG. 8, or the embodiment shown in FIG. 10. For example, the access network device includes a transceiver module (or referred to as a transceiver unit), configured to support the access network device in implementing a transceiver function, and a processing module (or referred to as a processing unit), configured to support the access network device in processing a signal.

All or some of the technical solutions provided in this disclosure may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, procedures or functions according to this disclosure are all or partially generated. The computer may be a general-purpose computer, a dedicated computer, a computer network, an access network device, a terminal device, an AI node, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

The foregoing descriptions are merely specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

**Claims**

1. A communication method, comprising:

   obtaining M pieces of first downlink channel sub-data, wherein each piece of first downlink channel sub-data corresponds to one data space in M data spaces, and M is an integer greater than 1;
   for an $i^{th}$ piece of first downlink channel sub-data in the M pieces of first downlink channel sub-data, determining, based on a first dictionary corresponding to an $i^{th}$ data space in the M data spaces, first information corresponding to the $i^{th}$ piece of first downlink channel sub-data, wherein M pieces of first information are determined in total, i is an integer from 1 to M, the $i^{th}$ piece of first downlink channel sub-data corresponds to the $i^{th}$ data space, the first dictionary comprises a plurality of elements, the first information corresponding to the $i^{th}$ piece of first downlink channel sub-data corresponds to P elements in the plurality of elements, and P is a positive integer; and
   sending first indication information, wherein the first indication information indicates the M pieces of first information.

2. The method according to claim 1, wherein the first indication information indicates identifiers of the M pieces of first information, and sending the first indication information comprises:
   sending the identifiers of the M pieces of first information in a first order, wherein the first order is an arrangement order of the M data spaces.

3. The method according to claim 2, wherein

   the first order is a predefined order;
   second indication information is received, and the second indication information indicates the first order; or
   the first order is determined, third indication information is sent, and the third indication information indicates the first order.

4. The method according to any one of claims 1 to 3, wherein the M pieces of first downlink channel sub-data are obtained based on first downlink channel data, wherein

   the first downlink channel data is a preprocessing result;
   the first downlink channel data comprises F consecutive columns of data in a preprocessing result; or
   the first downlink channel data is compressed information obtained by compressing a preprocessing result, wherein
   the preprocessing result is obtained by preprocessing second downlink channel data.

5. The method according to any one of claims 1 to 4, wherein

   a division manner of the M data spaces is predefined;
   fourth indication information is received, and the fourth indication information indicates a division manner of the M data spaces; or

a division manner of the M data spaces is determined, fifth indication information is sent, and the fifth indication information indicates the division manner of the M data spaces.

6. A communication method, comprising:

receiving first indication information, wherein the first indication information indicates M pieces of first information, and M is an integer greater than 1;
for an $i^{th}$ piece of first information in the M pieces of first information, reconstructing an $i^{th}$ piece of second downlink channel sub-data based on a first dictionary corresponding to an $i^{th}$ data space in M data spaces, wherein M pieces of second downlink channel sub-data are obtained in total, the $i^{th}$ piece of first information corresponds to the $i^{th}$ data space, i is an integer from 1 to M, the first dictionary comprises a plurality of elements, and the first information corresponding to the $i^{th}$ piece of second downlink channel sub-data corresponds to P elements in the plurality of elements; and
reconstructing downlink channel information based on the M pieces of second downlink channel sub-data.

7. The method according to claim 6, the receiving first indication information comprises:
receiving identifiers of the M pieces of first information in a first order, wherein the first order is an arrangement order of the M data spaces.

8. The method according to claim 7, wherein

the first order is a predefined order;
second indication information is sent, and the second indication information indicates the first order; or
third indication information is received, and the third indication information indicates the first order.

9. The method according to any one of claims 6 to 8, wherein the M data spaces correspond to M dictionaries, and each data space corresponds to one dictionary; or the M data spaces all correspond to a same dictionary.

10. The method according to any one of claims 6 to 9, wherein the reconstructing downlink channel information based on the M pieces of second downlink channel sub-data comprises:

obtaining compressed information based on the M pieces of second downlink channel sub-data; and
obtaining the downlink channel information based on the compressed information.

11. The method according to any one of claims 6 to 10, wherein

a division manner of the M data spaces is predefined;
fourth indication information is sent, and the fourth indication information indicates a division manner of the M data spaces; or
fifth indication information is received, and the fifth indication information indicates a division manner of the M data spaces.

12. A communication apparatus, configured to implement the method according to any one of claims 1 to 5, or configured to implement the method according to any one of claims 6 to 11.

13. A communication apparatus, comprising a processor and a memory, wherein the memory is coupled to the processor, and the processor is configured to perform the method according to any one of claims 1 to 5, or configured to perform the method according to any one of claims 6 to 11.

14. A computer-readable storage medium, wherein the computer-readable storage medium is configured to store a computer program, and when the computer program is run on a computer, the computer is enabled to perform the method according to any one of claims 1 to 5, or the computer is enabled to perform the method according to any one of claims 6 to 11.

15. A communication system, comprising an apparatus configured to implement the method according to any one of claims 1 to 5, and/or an apparatus configured to implement the method according to any one of claims 6 to 11.

FIG. 1

FIG. 2

Network device

Terminal device

FIG. 3

Performance feedback

Model training node

Training data

Model deployment/
update

Model
feedback

Data source

Model inference
node

Inference data

Output

Actor

Act

Subject of action

Act

Subject of action

FIG. 4A

FIG. 4B

FIG. 4C

FIG. 4D

FIG. 4E

```
┌──────────────┐                                    ┌──────────────────┐
│      UE      │                                    │  Access network  │
│              │                                    │      device      │
└──────┬───────┘                                    └────────┬─────────┘
       │                                                     │
┌──────┴───────────────────────┐                             │
│ S501: Obtain M pieces of first│                            │
│ downlink channel sub-data, where each                      │
│ piece of first downlink channel sub-│                      │
│ data corresponds to one data space in                      │
│ M data spaces                 │                            │
└──────┬───────────────────────┘                             │
       │                                                     │
┌──────┴───────────────────────┐                             │
│ S502: Determine, based on a first                          │
│ dictionary corresponding to an iᵗʰ data                    │
│ space, first information corresponding                     │
│ to an iᵗʰ piece of first downlink channel                  │
│ sub-data                      │                            │
└──────┬───────────────────────┘                             │
       │                                                     │
       │   S503: First indication information                │
       │  (indicating M pieces of first information)          │
       │ ──────────────────────────────────────────────────> │
       │                                                     │
       │                            ┌────────────────────────┴─────────┐
       │                            │ S504: For an iᵗʰ piece of first   │
       │                            │ information, reconstruct an iᵗʰ piece of
       │                            │ second downlink channel sub-data  │
       │                            │ based on the first dictionary     │
       │                            │ corresponding to the iᵗʰ data space
       │                            └────────────────────────┬─────────┘
       │                                                     │
       │                            ┌────────────────────────┴─────────┐
       │                            │ S505: Reconstruct downlink channel
       │                            │ information based on M pieces of  │
       │                            │ second downlink channel sub-data  │
       │                            └────────────────────────┬─────────┘
       │                                                     │
```

FIG. 5

EP 4 447 524 A1

|  | 0 | Element |  |
|---|---|---|---|
| Index of a data space | 1 | Element | Data space 0 |
|  | 2 | Element |  |
|  | 3 | Element |  |

|  | 0 | Element |  |
|---|---|---|---|
| Index of a data space | 1 | Element | Data space 1 |
|  | 2 | Element |  |
|  | 3 | Element |  |

...

|  | 0 | Element |  |
|---|---|---|---|
| Index of a data space | 1 | Element | Data space M−1 |
|  | 2 | Element |  |
|  | 3 | Element |  |

FIG. 6

FIG. 7

| A first node obtains M pieces of third downlink channel sub-data, where each piece of third downlink channel sub-data corresponds to one data space in M data spaces | S801 |

| The first node performs clustering training, to obtain N dictionaries | S802 |

FIG. 8

FIG. 9A

Data
space
Third          division
downlink  ⟹                                         $y_1$: [4×S,16×13]
channel data                    ▯ ▯ ▯ ▯  ────────────────→  (q₁)

## FIG. 9B

Data
space
Third          division
downlink  ⟹
channel data

▯      $y_1$: [S,16×F]  ────────→  (q₁)

▯      $y_2$: [S,16×F]  ────────→  (q₂)

▯      $y_3$: [S,16×F]  ────────→  (q₃)

▯      $y_4$: [S,16×F]  ────────→  (q₄)

## FIG. 9C

Data
space
Third          division
downlink  ⟹                                         $y_1$: [4×S,16×F]
channel data                    ▯ ▯ ▯ ▯  ────────────────→  (q₁)

## FIG. 9D

A second node obtains fifth downlink channel data — S1001

The second node inputs the fifth downlink channel data into an encoder network, to obtain sixth downlink channel data output by the encoder network — S1002

The second node obtains M pieces of sixth downlink channel sub-data — S1003

The second node obtains M pieces of third information based on the M pieces of sixth downlink channel sub-data and N to-be-trained dictionaries — S1004

For an $i^{th}$ piece of third information in the M pieces of third information, the second node reconstructs an $i^{th}$ piece of fifth downlink channel sub-data based on a to-be-trained dictionary corresponding to an $i^{th}$ data space in M data spaces — S1005

The second node inputs M pieces of fifth downlink channel sub-data into a decoder network, to obtain L pieces of reconstructed information output by the decoder network — S1006

FIG. 10

FIG. 11

1200

1201

Processor

Instructions

1203

1202

Memory

Instructions

1204

Transceiver

1205

Antenna

1206

FIG. 12

## INTERNATIONAL SEARCH REPORT

| International application No. |
| --- |
| **PCT/CN2022/142946** |

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

CNTXT, DWPI, ENTXTC, VEN, ENTXT, CNKI, 3GPP: 划分, 空间, 码本, 数据, 数据空间, 下行信道, 信道, 字典, csi, code? book, wordbook, divid+, data space, downlink data

**C. DOCUMENTS CONSIDERED TO BE RELEVANT**

| Category* | Citation of document, with indication, where appropriate, of the relevant passages | Relevant to claim No. |
| --- | --- | --- |
| X | CN 107113797 A (HUAWEI TECHNOLOGIES CO., LTD.) 29 August 2017 (2017-08-29) claims 1-40, and description, p. 20, line 21 to p. 38, line 2, and p. 51, lines 18-24 | 1-15 |
| A | WO 2020156103 A1 (HUAWEI TECHNOLOGIES CO., LTD.) 06 August 2020 (2020-08-06) entire document | 1-15 |
| A | WO 2020143580 A1 (HUAWEI TECHNOLOGIES CO., LTD.) 16 July 2020 (2020-07-16) entire document | 1-15 |
| A | WO 2019137445 A1 (HUAWEI TECHNOLOGIES CO., LTD.) 18 July 2019 (2019-07-18) entire document | 1-15 |

☐ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **20 February 2023** | **03 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

# EP 4 447 524 A1

| INTERNATIONAL SEARCH REPORT Information on patent family members | | | International application No. PCT/CN2022/142946 | | | |
|---|---|---|---|---|---|---|

| Patent document cited in search report | | | Publication date (day/month/year) | Patent family member(s) | | | Publication date (day/month/year) |
|---|---|---|---|---|---|---|---|
| CN | 107113797 | A | 29 August 2017 | WO | 2016149887 | A1 | 29 September 2016 |
| | | | | US | 2018013479 | A1 | 11 January 2018 |
| | | | | US | 10084524 | B2 | 25 September 2018 |
| | | | | EP | 3273734 | A1 | 24 January 2018 |
| | | | | EP | 3273734 | A4 | 18 April 2018 |
| | | | | EP | 3273734 | B1 | 08 July 2020 |
| | | | | JP | 2018514123 | A | 31 May 2018 |
| | | | | JP | 6564052 | B2 | 21 August 2019 |
| | | | | US | 2018367201 | A1 | 20 December 2018 |
| | | | | US | 10333607 | B2 | 25 June 2019 |
| WO | 2020156103 | A1 | 06 August 2020 | None | | | |
| WO | 2020143580 | A1 | 16 July 2020 | None | | | |
| WO | 2019137445 | A1 | 18 July 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111663303